(19) Europäisches Patentamt
European Patent Office
Office européen des brevets

(11) EP 2 771 396 B1

(12) # EUROPEAN PATENT SPECIFICATION

(45) Date of publication and mention of the grant of the patent:
**11.07.2018 Bulletin 2018/28**

(21) Application number: **12787392.5**

(22) Date of filing: **24.10.2012**

(51) Int Cl.:
***C08K 9/04*** *(2006.01)* ***C08K 3/34*** *(2006.01)*
***C09D 5/02*** *(2006.01)*

(86) International application number:
**PCT/EP2012/071076**

(87) International publication number:
**WO 2013/060738 (02.05.2013 Gazette 2013/18)**

(54) **PROCESS FOR PREPARING A POLYMER COMPOSITION COMPRISING HYDROTALCITES INTERCALATED WITH ACTIVE MOLECULES, COMPOSITION THUS OBTAINED AND SHAPED ARTICLES COMPRISING THE SAME**

VERFAHREN ZUR HERSTELLUNG EINER POLYMERZUSAMMENSETZUNG HYDROTALCITEN MIT INTERKALIERTEN AKTIVEN MOLEKÜLEN, AUF DIESE WEISE GEWONNENE ZUSAMMENSETZUNG UND FORMKÖRPER DAMIT

PROCÉDÉ POUR PRÉPARER UNE COMPOSITION DE POLYMÈRE COMPRENANT DES HYDROTALCITES INTERCALÉES AVEC DES MOLÉCULES ACTIVES, COMPOSITION AINSI OBTENUE ET ARTICLES FORMÉS COMPRENANT CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.10.2011 IT MI20111921**

(43) Date of publication of application:
**03.09.2014 Bulletin 2014/36**

(73) Proprietor: **Nice Filler S.r.l.**
**84084 Fisciano (SA) (IT)**

(72) Inventors:
- **VITTORIA, Vittoria**
  **I-80013 Napoli (IT)**
- **TAMMARO, Loredana**
  **I-84099 San Cipriano Picentino (SA) (IT)**
- **BUGATTI, Valeria**
  **I-84085 Mercato San Severino (SA) (IT)**
- **BIANCHI, Riccardo**
  **I-80129 Napoli (IT)**

(74) Representative: **Zanoli, Enrico et al**
**Zanoli & Giavarini S.p.A.**
**Via Melchiorre Gioia, 64**
**20125 Milano (IT)**

(56) References cited:
**WO-A2-2010/016034** **US-A1- 2003 114 699**
**US-A1- 2008 293 957** **US-A1- 2008 311 410**
**US-A1- 2010 323 103** **US-A1- 2011 040 006**

- **DATABASE WPI Week 200617 Thomson Scientific, London, GB; AN 2006-161201 XP002670869, -& JP 2006 052114 A (DOKURITSU GYOSEI HOJIN SANGYO GIJUTSU SO) 23 February 2006 (2006-02-23)**
- **DATABASE WPI Week 200568 Thomson Scientific, London, GB; AN 2005-660871 XP002670870, -& JP 2005 238194 A (DOKURITSU GYOSEI HOJIN SANGYO GIJUTSU SO) 8 September 2005 (2005-09-08)**
- **CARLINO S: "The intercalation of carboxylic acids into layered double hydroxides: a critical evaluation and review of the different methods", SOLID STATE IONICS, NORTH HOLLAND PUB. COMPANY. AMSTERDAM; NL, NL, vol. 98, no. 1-2, 1 June 1997 (1997-06-01) , pages 73-84, XP004126133, ISSN: 0167-2738, DOI: 10.1016/S0167-2738(96)00619-4**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 771 396 B1

- DREZDZON M A: "SYNTHESIS OF ISOPOLYMETALATE-PILLARED HYDROTALCITE VIA ORGANIC-ANION-PILLARED PRECURSORS", INORGANIC CHEMISTRY, AMERICAN CHEMICAL SOCIETY, EASTON, US, vol. 27, 1 January 1988 (1988-01-01), pages 4628-4632, XP001169287, ISSN: 0020-1669, DOI: 10.1021/IC00298A024

## Description

The present invention relates to a process for preparing a polymer composition comprising hydrotalcites intercalated with active molecules, to the polymer composition thus obtained and to shaped articles comprising the same. More particularly, the polymer composition according to the invention is prevalently formed by a thermoplastic or thermosetting polymer to which hydrotalcites intercalated with active molecules have been added. The composition can therefore be processed with the technologies used for plastic materials, and shaped articles such as films, rigid or semi-rigid containers and the like, can be obtained from said composition.

Polymer compositions comprising particular additives - defined herein as "active molecules" - capable of interacting positively with substances present in the environment can be used in various fields of application, for example in the food product packaging field, where they are also referred to as "functional active packagings".

Besides the function of containing a product - for example a food product - a functional active packaging performs other functions, such as the function of improving the preservation of the product, thus increasing the period for which it remains fresh. An active packaging is therefore capable of interacting positively with a biologically active product, generally a food product with which it is in contact or exposed, in order to obtain performances that cannot be obtained with conventional packaging. The positive interaction exerted by the active packaging is obtained, for example, by removing from the food unwanted substances, or substances that accelerate degradation, or by immobilizing or releasing substances with antimicrobial and/or antioxidant properties.

Substances with antioxidant or antimicrobial properties are often added to foods, to food packages or to the materials used for food packaging. Widely used antioxidant substances are, for example, ascorbic acid and related salts, tocopherols, gallates butylhydroxyanisole (BHA), butylhydroxytoluene (BHT), lactic, citric and tartaric acids and related salts. Antimicrobial substances widely used are for example sorbic, benzoic, acetic, propionic acids and related salts, ethyl-, propyl- and methyl-p-hydroxy-benzoate and related salts, sulfur dioxide, biphenyl, o-phenylphenol, sodium and potassium nitrites and nitrates.

Synthetic hydrotalcite is a layered solid substantially formed by positively charged layers whose charge is balanced by exchangeable anions located in the interlayer region. The anion can be an active molecule that is stored and preserved, and which in some cases can be subsequently released into the environment to interact positively therewith.

WO 2010/016034 discloses a polymer material for producing active packagings comprising active molecules intercalated in a synthetic hydrotalcite. Intercalation of the active molecules is implemented in a separate step subsequent to the synthesis of the hydrotalcite. Example 1 describes the preparation of a hydrotalcite in which the anion is carbonate ($CO_3^{--}$) and example 2 describes the subsequent intercalation of benzoate anions, an antimicrobial agent, via exchange with the carbonate anion. The intercalation compound is then dispersed in a polymer matrix from which the intercalated active molecule is released more or less slowly in such a manner as to interact with the environment and/or the products with which the material is in contact, in order to produce the desired antimicrobial action.

WO 2009/080629 discloses the preparation of nanocomposite materials comprising clays that contain ions of organic molecules. The preparation process of these nanocomposite materials takes place through a one-step reaction conducted at a temperature of over 170 °C and at high pressure. These nanocomposite materials are used for optical applications.

US 2010/0323103 A1 discloses a stonechip-resistant coating material comprising a film-forming polymer and electrically charged inorganic particles consisting preferably of mixed hydroxides (Layered Double Hydroxydes, LDH, or hydrotalcite). Such LDH include singly-charged organic counterions intercalating the interstices and can be prepared with the coprecipitation method. The singly-charged organic counterions can be either singly-charged cations or singly-charged anions. The film forming polymer is a water-dispersible polymer and the coating material is prepared by mixing a water suspension of the hydrotalcite with a water dispersion of the water-dispersible polymer under stirring. The resulting mixture is treated with ultrasounds and is aged with stirring. The coating material is applied in the form of water dispersion onto pre-trated steel panels to increase the stone-chip resistance of the steel panels. There is no disclosure of a material for food packaging.

US 2008/0293957 A1 discloses a process for preparing organically modified layered double hydroxides comprising an organic anion as charge balancing anion. The organic anion is added before or during the formation of the LDH. The process comprises a solvothermal treatment of a precursor suspension of the LDH. There is no description of reacting a solution of salts of the metals M(II) and M(III) and no description of formation of the LDH by precipitation from said solution at a pH above 7. Also, there is no disclosure of a material for food packaging.

US 2003/0114699 A1 describes novel hydrotalcites for use as catalysts, ion exchangers, ion absorbers, ion-scavengers, and in the medical field as antacids. Also described are nanocomposites comprising hydrotalcite and polymers, in particular of nanocomposites comprising modified hydrotalcites which are more easily dispersed in non-polar polymers without the necessity of using a compatibilzer. The modified hydrotalcite is prepared with a rather complex process comprising several reaction steps, in particular a first reaction step in which a source of trivalent cation, typically

an oxide, is reacted with an organic anion to obtain a reaction intermediate, and a second reaction step in which this intermediate is reacted with a source of divalent cation, typically an oxide. Several experimental data show that in the nanocomposites comprising hydrotalcite and polymers the hydrotalcite is completely "exfoliated", namely it is fully separated into its mineral layer, as opposed to be "intercalated", this latter being an hydrotalcite in which other molecules are inserted between the layers of hydroxides. There is no disclosure of a material for food packaging.

US 2008/0311410 A1 discloses LDH comprising two or more charge-balancing organic anions and nanocomposite materials comprising such modified LDH and a polymer matrix. The LDH can reportedly be prepared according to known methods, including synthesis in the presence of the organic ions. The examples describe the synthesis of a modified LDH using a water suspension of metal oxides/hydroxides treated with an acid suspension (Kortacid®PH05) and with stabilized rosin as charge balancing anion. There is no disclosure of a material for food packaging.

US 2011/0040006 A1 discloses compositions with improved dirt pickup resistance comprising LDH particles intercalated or exfoliated with organic anions. The most important property of the intercalating substance is the acidic functionality and a certain solubility in water. In certain embodiment the intercalant is an oligomer or a polymer. The compositions can be used in coating but there is no disclosure of a material for food packaging.

JP 2006-52114 discloses LDH intercalated with carboxylate ion manufactured by co-precipitation. The LDH is then mixed with a solution of polyvinylalcohol to obtain a transparent resin solution. The obtained resin shows improved mechanical properties and flame retardance. There is no disclosure of a material for food packaging.

JP 2005-23819 discloses LDH intercalated with amino acid and carboxylate ion, manufactured by co-precipitation. The LDH is then mixed as a colloidal solution with a solution of polyvinylalcohol to obtain a transparent resin solution. The obtained resin used as compounding agent shows improved mechanical properties and flame retardance. There is no disclosure of a material for food packaging.

Carlino, S.: "The intercalation of carboxylic acids into layered double hydroxides: a critical evaluation and review of the different methods", Solid State Ionics, 98 (1997), 73-74, describes several methods of preparation of LDH intercalated with dicarboxylic acids, including the direct exchange method, the coprecipitation method, the rehydration method, the melt reaction method and the glycerol exchange method. The paper discusses also the Powder X-Ray Diffraction (PXRD) patterns for a LDH intercalated with sebacate anion (Mg-Al-[Sebacate]) prepared with the rehydration method, the coprecipitation method and the melt reaction method. The interlayer spacing found for the LDH prepared with the coprecipitation method was of 12.8 Å, and the interlayer spacing found for the LDH prepared with the rehydration method was of 11.5 Å. The paper does not provide any information about the size of the crystallites. The reflections corresponding to the basal spacing ($d_{003}$) at degrees 2θ lower than 12° 2θ, however, do not show significant differences between the two methods. Moreover the peaks are very sharp indicating in both cases ordered interstratifications.

The interest in functionally active packagings capable of containing food products, maintaining the freshness and nutritional and organoleptic properties thereof has stimulated research into increasingly high performance materials, i.e. capable of increasing the shelf life of the food to a maximum.

An object of the present invention is therefore to provide a process for preparing a polymer composition suitable for the production of food packagings capable of increasing the shelf life of the product with respect to prior art compositions.

Another object of the present invention is to provide a polymer composition suitable for the production of food packagings, comprising additives that are capable of increasing the shelf life of the product.

A further object of the present invention is to provide shaped articles, such as packagings or parts thereof, which are capable of increasing the shelf life of the food product contained therein or in contact therewith.

An aspect of the invention is therefore a process for manufacturing a polymer composition comprising:

a) Preparing a hydrotalcite intercalated with active molecules, having the formula (I)

$$[M(II)_{1-x}M(III)_x(OH)_2]^{x+}[A^{n-}{}_{x/n}]^{x} \cdot mS \qquad (I)$$

wherein:

M(II) = Mg, Zn, Cu, Mn, Co, Fe, Ni;
M(III) = Al, Mn, Fe, Co, Ni, Cr, Ga;
x = 0.2-0.4;
$A^{n-}$ is the intercalated anion of the active molecule with charge n-;
m = number of molecules of co-intercalated solvent (S);
S = co-intercalated solvent
said hydrotalcite intercalated with active molecules being prepared by reacting in a single step a solution of salts of the metals M(II) and M(III) with a solution containing the anion $A^{n-}$ of the active molecule A, at a temperature between 10 and 60 °C and at a pressure between 90 and 110 KPa, and by raising the pH of the

solution to ≥ 7 to cause precipitation of the intercalated hydrotalcite thus formed, said single reaction step being followed by the steps of collecting the precipitated intercalated hydrotalcite, washing it with water and and drying it until it contains less than 5% wt. of liquid;

b) Dispersing said hydrotalcite that contains less than 5% wt. of liquid and is intercalated with active molecules in a polymer matrix that contains less than 5% wt. of water; characterized in that:

- said hydrotalcite intercalated with active molecules has a Powder X-Ray Diffraction (PXRD) pattern in which the reflection peaks at 2Θ degrees lower than 12° 2Θ have a width measured at half-height of the peak of ≥ 2° 2Θ; and
- said polymer composition is prepared by dispersing said hydrotalcite that contains less than 5% wt. of liquid in said polymer matrix that contains less than 5% wt. of water; and
- said active molecule is selected from the group consisting of antimicrobial, antioxidants, antimycotics; and
- said active molecule is present in a quantity between 1-50% by weight with respect to the hydrotalcite.

The process above is preferably carried out at a temperature between 15 and 30 °C.

Another aspect of the invention is polymer composition comprising a polymer in which a hydrotalcite (I) intercalated with active molecules is dispersed

$$[M(II)_{1-x}M(III)_x(OH)_2]^{x+}[A^{n-}_{x/n}]^{x} \cdot mS \qquad (I)$$

wherein:

M(II) = Mg, Zn, Cu, Mn, Co, Fe, Ni;
M(III) = Al, Mn, Fe, Co, Ni, Cr, Ga;
x = 0.2-0.4;
$A^{n-}$ is the intercalated anion of the active molecule with charge n-;
m = number of molecules of co-intercalated solvent (S);
S = co-intercalated solvent

characterized in that:

- said hydrotalcite intercalated with active molecules has a Powder X-Ray Diffraction (PXRD) pattern in which the reflection peaks at 2Θ degrees lower than 12° 2Θ have a width measured at half-height of the peak of ≥2° 2Θ;
- said hydrotalcite contains less than 5% wt. of liquid and said polymer matrix contains less than 5% wt. of water;
- said active molecule is selected from the group consisting of antimicrobial, antioxidants, antimycotics;
- said active molecule is present in a quantity between 1-50% by weight with respect to the hydrotalcite.

A further aspect of the invention relates to shaped articles comprising the polymer composition comprising a thermoplastic polymer in which a hydrotalcite intercalated with active molecules there is dispersed, as defined above.

Advantageously these shaped articles are packagings or components of packagings adapted to increase the shelf life of the food product contained therein or in contact therewith.

A still further aspect of the invention is a coating composition comprising the hydrotalcite of formula (I) above dispersed in an adhesive polymer to be coated on an article, particularly an article for food packaging or a component of an article for food packaging. This coating composition preferably comprises a diluent or a solvent for the adhesive polymer.

A still further aspect of the invention is a coating composition comprising one or more precursors of the polymer forming the composition defined above and a hydrotalcite of Formula (I) intercalated with active molecules, in which said one or more precursors and said hydrotalcite of Formula (I) are dissolved or dispersed in a liquid medium.

This coating composition is advantageously used to coat films, sheets or parts or components of packagings for containing food products, thereby increasing the shelf life of the food product contained therein or in contact therewith.

In the present description the term "substantially dry hydrotalcite" means a hydrotalcite that contains less than 5% wt. of liquid, including adsorbed water.

In the present description the term "substantially water free polymer matrix" means a polymer matrix that contains less than 5% wt. of water.

In the present description the term "substantially water free polymer composition" means a composition that does not contain water besides the water possibly contained in the polymer matrix by adsorption in the environment.

As stated previously, hydrotalcites are layered solids whose layers, substantially formed by Layered Double

Hydroxides (LDHs), have positive charges balanced by anions that are located in the interlayer region and are exchangeable.

The intercalated hydrotalcite according to the invention has the general formula (I) indicated above, in which preferably M(II) = Mg or Zn, M(III) = Al, S = $H_2O$.

In the present description the term "hydrotalcite intercalated with functionally active molecules" or the designation "LDH-A", where A stands for the anion of the active molecule, are used interchangeably. For example, "LDH-sal" indicates a hydrotalcite intercalated with salicylic acid anion.

It has now been found that hydrotalcites intercalated with functionally active molecules prepared in a single reaction step by co-precipitation from the salts of the metals M(II) and M(III) in the presence of the active molecule $A^{n-}$, and subsequently dispersed in a substantially water-free polymer matrix, make it possible to obtain packagings in which the action of the functionally active molecule is improved, in particular is extended in time. X-ray diffractogram analysis of the LDH-A powders prepared with the co-precipitation method, also called "one-step method" or "single-step method", exhibits significant differences with respect to X-ray diffractogram of the LDH-A powders prepared with the two-step method. This latter LDH-A exhibits very sharp and intense crystalline peaks, typically with reflection peaks at 2θ degrees lower that 12° 2θ being very intense and having a width measured at half-height of the peak of about 0.3° 2θ. These reflection peaks are indicative of an ordered crystalline structure, while the LDH-A obtained from co-precipitation exhibits broader and less intense peaks. The peaks considered are those with lower diffraction angles (less than 12° of 2θ) that correspond to the distance between the interlamellar layers in which the anions are positioned. The position of the diffraction peak depends on the anion, the size of which determines the distance between the layers. Broader and less intense peaks are a sign of defective interstrate and smaller crystallites. As it is known, the width at half-height of a reflection peak is inversely related to the size and order of the interstrate and crystallites. The hydrotalcite intercalated with active molecules of Formula (I) has a Powder X-Ray Diffraction (PXRD) pattern in which the reflection peaks at 2θ degrees lower that 12° 2θ have a width measured at half-height of the peak of ≥ 2° 2θ. The X-ray diffraction spectra (XRPD) on the powders referred to in the present description were carried out with a Bruker diffractometer equipped with a continuous scan and proportional counter. The measurements were taken at ambient temperature with an automatic powder diffractometer with vertical focusing goniometer, and detection system with scintillation counter. The monochromatic radiation used was the Kα of Cu, filtered with an Ni layer (λ = 1.54050Å), obtained by supplying power to the tube at 40 kV and 40 mA. The diffraction spectrum, which indicates the scattering intensity as a function of the diffraction angle 2θ, is obtained with a scanning speed of 2°θ/min in an interval of 2θ ranging from 2° to 40°, step scan 0.05° and counting time 3sec.

Without being bound to any theory, it has been found that LDHs of formula (I), having smaller and defective crystallites, can disperse better in the polymer matrix, allowing an increase in detachment of the anions of the active molecules from the interlamellar layers, and an enhanced release of the active molecule in the environment, nevertheless much slower than when the active molecules re directly incorporated into the polymer. When the polymer composition is used as a packaging or as a component of a packaging for food products, the active molecules so released intercat with the food product, thereby increasing the life cycle of the food product.

Typically, the polymer composition according to the invention comprises 50-99% by weight of polymer matrix, preferably 60-90% by weight of polymer, and 50-1 % by weight of intercalated hydrotalcite, preferably around 40-10% by weight of intercalated hydrotalcite. Preferably the polymer matrix is a thermoplastic polymer.

Preferably the quantity of active molecule with respect to the hydrotalcite component is given by the following expression:

$$\text{Charge } (g/g) = \alpha \cdot \text{PM}/\{\text{PF} + \alpha \cdot \text{PM})$$

where:

α is the degree of intercalation, defined as number of moles of active molecule intercalated and/or absorbed by 1 mol of hydrotalcite,

PM is the molecular weight (g/mol) of the active molecule A,

PF is the formula weight (g/mol) of the hydrotalcite not comprising the active molecule A. The active molecule A is present in a quantity between 1-50% by weight, more preferably 20-50%, even more preferably around 40-50% with respect to the hydrotalcite. This percentage is linked to the molecular weight of the active molecule.

Thermoplastic polymers that can advantageously be used according to the invention are synthetic or natural biodegradable or biocompatible synthetic polymers. Some examples of polymer classes that can be used are the following: polyolefins, polyethylene glycols, polycaprolactones and polyesters, polylactides, polyanhydrides, polyvinylpyrrolidones, polyurethanes, polysiloxanes, polyacrylates and polymethacrylates, polyamides, polyimides, polyanilines,

polyacrylonitriles, silicones, polyether-ketones, polyether-ether-ketones, natural polymers such as polysaccharides in general, amides, celluloses, chitins, chitosans, pectins, gelatins, proteins, polypeptides; taken individually or in a mixture thereof, possibly functionalized and possibly partly or totally cross-linked, possibly with the addition of additives such as: stabilizers, plasticizers; all within the knowledge of those skilled in the art. Thermosetting polymers that can be used as polymer matrix in the composition of the invention are all those derived from cross-linking reactions of epoxy or olefin precursors or precursors of another nature.

It was noted that incorporation of the intercalation compound according to the invention in the polymer matrix improves the mechanical properties (for example elastic modulus and rupture energy), thermal properties (for example, increase in the vitreous transition temperature and the thermal degradation temperature of the polymer) thereof and the permeability to gas, liquids and vapours, thus enabling the production and processing of articles and products that have high mechanical modulus, good toughness and improved barrier effect.

The polymer composition according to the invention is capable of fixing - through the intercalated hydrotalcite - and subsequently releasing, active molecules, such as antimycotics, antioxidants, antimicrobials and can be modulated in a wide range, both with regard to the quantities of anchored molecules and with regard to those released, with variable times. Furthermore, fixing of the active molecule through ionic bonds allows release of the active molecules only through ionic exchange reactions, the kinetics of which depends on the concentration of ionic bonds, on the type of counterion in solution, on the ionic force of the solution, on the pH, on the temperature. Therefore, the active molecules are released only in presence of particular interactive environments. Release can consequently be modulated in a wide range of situations and can be adapted to specific requirements.

It has surprisingly been found that when the intercalation compound prepared with the single-step process according to the invention, and in which the reflection peaks at $2\theta$ degrees lower that 12° PXRD pattern have a width measured at half-height of the peak of at least 1.5° $2\theta$, is dispersed in the polymer matrix, the kinetics of release of the active molecule is much slower compared to that of the molecule incorporated directly in the polymer matrix, namely without use of the hydrotalcite, and is also different from that of the molecule intercalated in the hydrotalcite via exchange with a two-step process. Actually the kinetics of the release is intermediate between that of the free molecule and the molecule fixed in the hydrotalcite with the two stage process. Surprisingly the intermediate release is very effective in protecting the food and increasing its shelf-life. In the polymer composition according to the invention the release of the active molecule includes a first fast step, that allows immediate protection of the environment, and a second slower step that allows the protection to be maintained in time. The intercalation compound prepared with the single step process and having the PXRD pattern according to the invention is preferably dispersed at micrometer or nanometer level in the polymer matrix, i.e. the size of the particles of intercalation compound is preferably less than 100 $\mu$m, more preferably less than 50 $\mu$m up to nanometers.

The process for preparing the hydrotalcite intercalated with active molecule is a one-step process that provides for the direct precipitation reaction of the double hydroxides of the metals M(II) and (MIII) in the presence of the active ingredient in anionic form in solution. The hydrotalcite intercalated with active molecules LDH-A is prepared in a single step by means of reaction in aqueous solution of salts of the metals M(II) and M(III) with a solution containing the anion $A^{n-}$ of the active molecule A. The reaction in aqueous solution is conducted until reaching a pH > 7 through the addition of a solution of an alkaline hydroxide. The precipitate obtained is subsequently separated by filtration, washed and dried. The reaction is preferably conducted at a temperature between 20 and 60 °C and at a pressure between 90 and 110 KPa under a flow of inert gas.

According to one embodiment, an aqueous solution of the salts $Zn(NO_3)_2*6H_2O$ and $Al(NO_3)3*9H_2O$ is added rapidly to an anion solution of active molecule at ambient temperature, under stirring and under nitrogen flow. The pH slowly reaches the value of 7.5 with the addition at ambient temperature and under nitrogen flow, of a solution of a strong base, for example NaOH 1.5M, using an automatic titrator, operating at a flow of 100$\mu$l every 20". At the end of the reaction time, the product is vacuum filtered, washed repeatedly with decarbonated water and left in a vacuum oven at 50°C. It is left for a further 5h at 125°C. 5g of a white compound are obtained. The solid is characterized by X-ray, IR, TGA and elemental analysis (see FRUNZA et al.- J. Therm. An. 20, C2, 21).

The intercalation compound can be characterized through thermogravimetric measurements, which provide the quantity of residual inorganic compound after thermal degradation at 1000°C and through diffractometric analysis of the powders with X-ray (PXRD), which provides proof of intercalation of the active molecule.

After preparation, the intercalation compound is incorporated in the chosen polymer matrix. Said polymer matrix can be biodegradable or non-biodegradable, according to the use and can also be a copolymer or a blend of polymers and/or copolymers, and can be a thermoplasric or a thermosetting polymer.

The parameters to be taken into consideration in preparing the polymer composition with controlled release of active molecules according to the invention are:

a) type of polymer matrix;
b) concentration of the intercalation compound in the polymer matrix;

c) type of incorporation process, including:

- from solvent, via casting;
- by melting, via pressure fusion or extrusion;
- by ball milling (mixing in a mill with hard balls);
- by sonication

(See. Michael Alexandre, Philippe Dubois, Materials Science and Engineering, 28 (2000) 1-63; and: Sorrentino, Andrea; Gorrasi, Giuliana; Tortora, Mariarosaria; Vittoria, Vittoria; Costantino, Umberto; et. al. Polymer, Volume: 20, C2, 21). 1601-1608).

Once the polymer composition according to the invention is obtained, it can be subjected to subsequent processing to obtain the end products.

Some of the techniques and end products are indicated below by way of example, although others can also be used, as known to those skilled in the art:

- films and membranes, compact or porous, can be obtained via pressure fusion or via casting from solvent;
- specific products, of predefined shape, can be obtained by injection molding in the specific shape;
- multilayered products.

The parameters on which the release kinetics of the active molecules depends can be modulated and controlled in a wide range. On the basis of the present description and of the general expertise, those skilled in the art are able to select the most suitable parameters. In general, the aspects to be evaluated are:

- type of active molecule;
- type of inorganic material (type of di and tri- valent metal cations and their proportion) onto which the active molecule is anchored, by strong (ionic) or weak bonds;
- type of polymer matrix, including homopolymers, copolymers or mixtures;
- concentration of the active molecule anchored to the inorganic compound;
- concentration of the complex (active molecule-hydrotalcite) in the polymer matrix;
- type of processing of the product (compact or porous).

It is therefore apparent that through appropriate selection and control of the aforesaid parameters it is possible to produce products suitable for applications in the field of active packaging of food.

The composition can be utilized above all to manufacture packagings for solid, semi-solid or liquid food products.

According to another aspect of the invention, the hydrotalcite intercalated with active molecule is incorporated in a polymer coating composition, which is then applied to the desired article or final product to form a layer of polymer composition on an article which is not a "functional active packaging". This coating composition is advantageously used to coat films, sheets or parts of packagings for containing food products, thereby increasing the shelf life of the food product contained therein or in contact therewith.

In one embodiment the coating composition comprises the polymer composition defined above dissolved or dispersed in a liquid medium.

An aspect of the invention is therefore represented by a coating composition for coating articles intended to come into contact with the food products, wherein the polymer matrix is a polymeric adhesive, or adhesive polymer, in which there is dispersed, via a dispersion medium or diluent, a certain percentage of hydrotalcite containing active molecules. Application of this coating composition to a substrate or an article and subsequent removal of the dispersion medium/agent determines the formation of a surface layer containing hydrotalcite with active molecules on the substrate or article.

Polymeric adhesives suitable for use in the coating composition are selected from the group consisting of epoxy resins, vinyl resins (including PVC), acrylic resins, ketonic resins, hydrogenated hydrocarbon resins, urea-aldehyde resins.

Preferred polymeric adhesives are acrylic resins and epoxy resins.

Acrylic resins include derivatives (mainly esters) of acrylic, methacrylic, and cyanoacrylic acids. The most common acrylic adhesives are made from monomeric esters and from solutions of polyacrylates in the monomers themselves, in inert organic solvents, or in mixtures of the monomers and solvents.

Suitable diluent for acrylic resins are methyl-ethyl-ketone and ethyl acetate. Epoxy resins, also known as polyepoxides, are a class of reactive prepolymers and polymers which contain epoxide groups. Epoxy resins may be reacted (cross-limked) either with themselves through catalytic homopolymerisation, or with a wide range of co-reactants including polyfunctional amines, acids (and acid anhydrides), phenols, alcohols and thiols. These co-reactants are often

referred to as hardeners or curatives, and the cross-linking reaction is commonly referred to as curing. Reaction of polyepoxides with themselves or with polyfunctional hardeners forms a thermosetting polymer, often with high mechanical properties.

Some polymeric adhesives are used in the form of aqueous emulsions.

In one embodiment the the coating composition comprises one or more precursors of the polymer forming the composition defined above, which can also be a polymeric adhesive. In this embodiment the hydrotalcite of Formula (I) intercalated with active molecules and one or more precursors of the polymer are dissolved or dispersed in a liquid medium, and the final polymer matrix is formed by reaction of these precursor(s). This reaction typically occurs or is completed after application of the composition as a coating on a substrate or article. Examples of precursors of the polymer are pre-polymers or monomers that react to form the final polymers, or polymers that cross-link to form the final polymer matrix.

Preferably the substrate or article is a polymer film. In this case, polymer films are coated with an acrylic adhesive for food products, or with other types of polymer adhesives suitable to come into contact with food products, in which LDH-A has been dispersed, for example using ethyl acetate as solvent. Different percentages of LDH-A can be used. Preferred percentages of LDH-A with respect to the adhesive are between 5 and 25% by weight, more preferably between 8 and 20% by weight, even more preferably between 10 and 15% by weight. The quantity of adhesive applied to the polymer film is preferably between 5.0 and 3.0 g/$m^2$.

The choice of the active molecule depends on the application, and range from antimicrobials to antioxidants to antimycotics.

Antimicrobial preservatives, E200-E299

- E200 Sorbic acid (preservative)
- E201 Sodium sorbate (preservative)
- E202 Potassium sorbate (preservative)
- E203 Calcium sorbate (preservative)
- E214 Ethyl para-hydroxybenzoate (preservative)
- E215 Sodium ethyl para-hydroxybenzoate ("ethylparaben") (preservative)
- E216 Propyl para-hydroxybenzoate (preservative)
- E217 Sodium propyl para-hydroxybenzoate ("propylparaben") (preservative) .
- E218 Methyl para-hydroxybenzoate (preservative)
- E219 Sodium methyl para-hydroxybenzoate ("methylparaben") (preservative)
- E231 Ortho-phenylphenol (preservative)
- E232 Sodium ortho-phenylphenol (preservative)
- E233 Thiabendazole (preservative)
- E234 Nisin (preservative)
- E235 Natamycin, Pimaricin (preservative)
- E236 Formic acid (preservative) .
- E237 Sodium formate (preservative)
- E238 Calcium formate (preservative)
- E239 hexamethylenetetramine, hexamine (preservative)
- E242 Dimethyl dicarbonate (preservative)
- E249 Potassium nitrite (preservative)
- E260 Acetic acid (preservative)
- E261 Potassium acetate (preservative)
- E262 Sodium acetate and Sodium diacetate (preservative)
- E263 Calcium acetate (preservative)
- E264 Ammonium acetate (preservative)
- E270 Lactic acid (preservative) (acid) (antioxidant)
- E280 Propionic acid (preservative)
- E281 Sodium propionate (preservative)
- E282 Calcium propionate (preservative)
- E283 Potassium propionate (preservative)
- E284 Boric acid (preservative)
- E285 Borax, sodium tetraborate (preservative)
- Sodium salicylate (preservative)

- Lysozyme EC 3.2.1.17

Antioxidants: E300-E399;

- E300 Ascorbic acid (Vitamin C) (antioxidant)
- E301 Sodium ascorbate (antioxidant)
- E302 Calcium ascorbate (antioxidant)
- E303 Potassium ascorbate (antioxidant)
- E304 Fatty acid esters of ascorbic acid (i) Ascorbyl palmitate (ii)
- Ascorbyl stearate (antioxidant)
- E306 Tocopherol-rich natural extracts (antioxidant)
- E307 α-tocopherol (synthetic) (antioxidant)
- E308 γ-tocopherol (synthetic) (antioxidant)
- E309 δ-tocopherol (synthetic) (antioxidant)
- E310 Propyl gallate (antioxidant)• E311 Octyl gallate (antioxidant)
- E312 Dodecyl gallate (antioxidant)
- E315 Erythorbic acid (antioxidant)
- E316 Sodium erythorbate (antioxidant)
- E320 Butylated hydroxyanisole (BHA) (antioxidant)
- E321 Butylated hydroxytoluene (BHT) (antioxidant)
- E325 Sodium lactate (antioxidant)
- E326 Potassium lactate (antioxidant)
- E327 Calcium lactate (antioxidant)
- E329 Magnesium lactate (antioxidant)
- E330 Citric acid (antioxidant)
- E331 Sodium citrates: (i) Monosodium citrate (ii) Disodium citrate (iii) Trisodium citrate (antioxidant)
- E332 Potassium citrates: (i) Monopotassium citrate (ii) Tripotassium citrate (antioxidant)
- E334 Tartaric acid (L(+/-) (acid) (antioxidant)
- E335 Sodium tartrates: (i) Monosodium tartrate (ii) Disodium tartrate (antioxidant)
- E336 Potassium tartrates: (i) Monopotassium tartrate (cream of tartar) (ii) Dipotassium tartrate (antioxidant)
- E337 Sodium and potassium tartrate (antioxidant)
- E338 Phosphoric acid (antioxidant)
- E339 Sodium phosphates: (i) Monosodium phosphate (ii) Disodium phosphate (iii) Trisodium phosphate (antioxidant)
- E340 Potassium phosphates: (i) Monopotassium phosphate (ii) Dipotassium phosphate (iii) Tripotassium phosphate (antioxidant)
- Lipoic acid
- Sulphurated amino acids (cystine, methionine, cysteine, taurine, cysteic acid).
- Beta carotene or provitamin A (carotenoid)
- Bioflavonoids
- Coenzyme Q10
- E.D.T.A. (ethylenediaminetetraacetic acid)
- Glutathione
- Lycopene (carotenoid)
- Luteine (carotenoid)
- Melatonin
- Methionine
- MSM
- NAC or N-Acetyl-Cysteine
- Pycnogenol
- Potassium
- Copper
- Resveratrol
- Selenium
- Vitamin A
- Vitamin C
- Vitamin E

- Zeaxanthin
- Zinc
- Chlorophyll
- Anthocyanine
- Lycopene

Antimycotics

- Metronidazole (benzoate)
- Doxycycline
- Acyclovir
- Famciclovir
- Methisoprinol
- Valacyclovir (hydrochloride)

The present invention also relates to articles or products forming polymer packagings, both rigid and flexible, comprising molecules that make them active in the sense expounded above. In the present description the terms "article" and "product" are used in an essentially interchangeable manner and designate both semi-finished articles and finished products that can be used directly by a user.

**EXAMPLES**

Example 1

Preparation of the intercalated hydrotalcite-active molecule

(Double Hydroxide of Zinc or Magnesium and Aluminum containing as intercalated the anion of an active molecule).

Starting from nitrates of zinc (or magnesium) and of aluminum, the solution of the two salts ($Zn(NO_3)_2 \cdot 6H_2O$) and $Al(NO_3)_3 \cdot 9H_2O$) was added rapidly to the solution of the anion of the active molecule (e.g. salicylate anion) under stirring and under nitrogen flow.

Synthesis of the hydrotalcite salicylate was carried out through the following reactions:

$$0.65Zn(NO_3)_2 + 0.35Al(NO_3)_3 + 2NaOH \rightarrow [Zn_{0.65}Al_{0.35}(OH)_2](NO_3)_{0.35} + 2Na(NO_3)$$

$$[Zn_{0.65}Al_{0.35}(OH)_2](NO_3)_{0.35} + 0.35sal^- \rightarrow [Zn_{0.65}Al_{0.35}(OH)_2]sal_{0.35}$$

The synthesis was conducted in decarbonated water and under nitrogen flow to prevent the formation of carbonates. A solution of NaOH was added to the aqueous solution of sodium salicylate (salNa), of zinc nitrate hexahydrate ($Zn(NO_3)_2 \cdot 6\ H_2O$) and of aluminum nitrate nonahydrate ($Al(NO_3)_3 \cdot 9H_2O$) until precipitation of the hydrotalcite salicylate ($[Zn_{0,65}Al_{0,35}(OH)_2]sal_{0,35}$) at pH 7.5. The pH gradually reached the value of 7.5 with the addition of NaOH 1.5M (around 8 hours). At the end of the reaction the mixture was filtered, washed repeatedly and dried. The content of water was less than 4%.

The product was characterized from a structural, thermal and elemental viewpoint.

The quantities indicated in the table below were used for synthesis of 100g of hydrotalcite intercalated with salicylate anion. The quantity of NaOH used was in excess with respect to the stoichiometric quantity:

| | Equivalents | M.W. | Quantity in grams | Moles | Volume of decarbonated water (ml) |
|---|---|---|---|---|---|
| salNa | 1.6 | 160.10 | 68.14 | 0.425 | 200 |
| ($Zn(NO_3)_2 \cdot 6\ H_2O$) | 2 | 297.49 | 158.6 | 0.533 | 300 |
| ($Al(NO_3)_3 \cdot 9H_2O$) | 1 | 375.13 | 100 | 0.266 | |
| NaOH 1.5M | 7.5 | 40 | 80 | 2 | 1.33 |

Example 2 (Comparison)

A hydrotalcite intercalated with salicylate anion was prepared using the process in several steps described in WO 2010/016034.

Solid urea was added to 0.5 mol/dm$^3$ of a metal chloride solution, having a mole fraction M(III)/ [M(III) + M(II)] of 0.33, until the urea/[M(II) + M(III)] molar ratio reached the value 3.3. The clear solution was heated under stirring, at a temperature between 60 and 100°C. All the materials collected exhibited X-ray diffractograms typical of compounds belonging to the family of the hydrotalcites the general formula of which can be written as:

$$[M(II)_{1-x}M(III)_x(OH)_2]^{x+}[A^{n-}{}_{x/n}]^{x-}\cdot mS$$

where

M(II) can be Mg, Zn, Co, Ni, Mn etc.; M(III) can be Al, Cr, Fe, V, Co, etc.;
$A^{n-}$ is the anion that compensates the charge and can be $Cl^-$, $NO_3^-$, $CO_3^{--}$, $SO_4^-$, organic anions, etc.;
m is the number of molecules of co-intercalated solvent (S), per formula weight of the compound. The number of moles x of the cation M(III) per formula weight of the compound generally varies between 0.2 and 0.33 and its value determines the charge density of the layer. In the case of the present example a compound with the formula:

$$[Zn_{0.65}Al_{0.35}(OH)_2](CO_3)_{0.175}\cdot 0.5\ H_2O$$

determined through elemental analysis, was obtained (Sample A).

The sample A was titrated with HCl 1 M in solution of NaCl 1 M. The suspension was titrated in a pHstat and kept under stirring for 24 hours. Subsequently, it was centrifuged and the wet solid was washed three times with deionized and decarbonated water and dried in the oven. The crystalline solid was analyzed by X-ray to verify that exchange between carbonate and chloride had taken place. Elemental analysis showed that the compound (Sample B):

$$[Zn_{0.65}Al_{0.35}(OH)_2]\ Cl_{0.35}\ \cdot 0.6\ H_2O$$

was obtained.

To obtain the nitrated form the sample B was suspended in a solution 0.5 M of $NaNO_3$ for 24 hours. The recovered solid was washed three times with deionized decarbonated water and dried on a saturated solution of NaCl (relative humidity, R.H., 75%). The compound obtained had the formula $[Zn_{0.65}Al_{0.35}(OH)_2](NO_3)_{0.35}\cdot 0.6H_2O$ (Sample C).

Intercalation of the salicylate anion in the hydrotalcite was obtained by treating the nitrate form of the hydrotalcite with an aqueous solution of the anion 0.5 M (molar ratio organic anion/$NO_3^-$=3) for 24 hours at ambient temperature. The recovered solid was washed three times with deionized decarbonated water and dried to R.H. The compound of formula $[Zn_{0.69}Al_{0.31}(OH)_2](C_7H_5O_3)_{0.31}*1H_2O$ (LDH) ($P.M._{total}$= 141.8, of which the salicylate is 36% (w/w), was obtained sample D).

The X-ray diffraction spectra (XRPD) on the powders were conducted with a Bruker diffractometer (equipped with a continuous scan attachment and proportional counter) with Ni-filtered radiation, Cu K$\alpha$ ($\lambda$ = 1.54050 Å). The measurements were taken at ambient temperature with an automatic powder diffractometer with vertical focusing goniometer, and detection system with scintillation counter. The monochromatic radiation used was the K$\alpha$ of Cu, filtered with an Ni layer ($\lambda$ = 1.54050Å), obtained by supplying power to the tube at 40 kV and 40 mA. The diffraction spectrum, which indicates the scattering intensity as a function of the diffraction angle 2$\theta$, is obtained with a scanning speed of 2°$\theta$/min in an interval of 2$\theta$ ranging from 2° to 40°.

Fig. 1 is an X-ray diffractogram relating to the intercalated hydrotalcite obtained with the prior art method (continuous line, sample 1) and to the intercalated hydrotalcite obtained with the single step method of the invention (dashed line, sample 2).

Sample 1 showed very intense and sharp crystalline peaks, while in the sample obtained by co-precipitation (Sample 2) the peaks were very broad. The width at half-height of the peak at about 5° 2$\theta$ was of 0.3° for Sample 1 and of 1.7° for Sample 2. This is a sign of smaller and very defective crystals, which can disperse better in the polymer matrix.

Example 3

The intercalated hydrotalcites prepared in examples 1 and 2 were mixed at 3% (w/w) with polycaprolactone (PCL), by dissolving the polymer into acetone and dispersing the suitable quantity of LDH-A into the same solution under mechanical stirring. Afterwards the mixture was dried under vacuum and the composite was obtained in the form of film

by melt pressing. Fig. 2 shows that the sample 1 (line a) maintains the peak of the basal distance, while sample 2 (line b) has no peak. The width at half-height of the peak at about 5° 2θ was of 0.59° for Sample 1 (line a) and of 2.9° for Sample 2 (line b). It can be appreciated that in Sample 2 the hydrotalcite was dispersed and incorporated better in the polymer matrix than in Sample 1.

Example 4

Example 3 was repeated by mixing at 5% (w/w) the intercalated hydrotalcites prepared in Examples 1 and 2 with polycaprolactone (PCL). Fig. 3 shows that in the case of the mixture with 5% of filler, sample 2 has a much broader basal peak, sign of better dispersion of the crystals with respect to sample 1. The width at half-height of the peak at about 5° 2θ was of 0.45° for Sample 1 (line a) and of 2.9° for Sample 2 (line b).

Example 5

Water vapour absorption and diffusion were measured at different pressures on PCL films with 5% of sample 1 and 5% of sample 2.

The carrier properties (absorption and diffusion) were evaluated using a microgravimetric method, with a quartz spring weighing scale with extension of 1.62 cm/mg. The penetrant was water vapour and the experiments were conducted at 30°C.

The absorption and diffusion coefficients were evaluated at different vapour activities (a=P/Po), where P is the pressure to which the sample was exposed and Po the vapour pressure at that temperature. The interval of the activity used ranges from 0.2 to 0.6.

By measuring the increase of the weight in time for the samples exposed to vapour at a given partial pressure *p* both the equilibrium value of the absorbed vapour, Ceq (g/100g), and the diffusion coefficient D ($cm^2$/sec) were obtained, for each vapour activity.

The Table below shows the water vapour absorption and diffusion for the sample PCL+5%LDH-sal (sample 1) and PCL+5%LDH-sal (sample 2)

| Sample | activity | Ceq(g/100g) | D($cm^2$/sec) |
|---|---|---|---|
| LDH-sal Sample1 | 0.2 | 0.86 | $7.49*10^{-8}$ |
| | 0.4 | 0.97 | $8.17*10^{-8}$ |
| | 0.6 | 1.16 | $8.49*10^{-8}$ |
| LDH-sal Sample 2 | 0.2 | 0.26 | $2.9*10^{-9}$ |
| | 0.4 | 0.30 | $3.24*10^{-9}$ |
| | 0.6 | 0.41 | $4.17*10^{-9}$ |

It can be noted that the PCL sample with 5% of sample 2 absorbed less water at all the activities (vapour pressures) and also had a much lower diffusion coefficient. These results show that sample 2 had improved barrier properties.

Example 6

The PCL films with 5% of sample 1 (continuous line) and sample 2 (dashed line) were immersed in saline solution and the quantity of active molecule (salicylate anion) released by the film was measured after various times. Fig. 4 shows that the times and quantities released varied greatly in the two cases examined. In particular, after 2160 hours salicylate release from PCL+5%LDH-sal sample 2 was total while that of PCL+5%LDH-sal sample 1 was still 71%.

Example 7

Comparison between a polymer composition with intercalated hydrotalcite added in bulk and a polymer composition with intercalated hydrotalcite applied to the polymer as coating.

The polymer film with intercalated hydrotalcite (filler) in bulk behaved in a similar manner to the polymer film in which the filler was added as coating: however, the percentage of filler, considered with respect to the polymer film,

was at least ten times less than that of the film in bulk.

By way of example, Fig. 5 shows an image of experiments conducted with apples contained in vials closed by PET film as such (Vial No. 1), PET+LDH-sal (sample No. 2) mixed in bulk (Vial No. 2) and PET+LDH-sal (sample 2) obtained by applying a coating of filler to the PET film (Vial No. 3) after 6 months of preservation. As can be noted from the difference in colour and appearance, the pieces of apple contained in the vials closed by PET-filler films both in bulk and as coating have no signs of oxidation and moulds, which are instead evident on the piece of apple, darker and moldy, contained in vial number 1.

Moreover, the closure with the filler from sample 1 (bulk) is less effective than the closure with the filler from sample 2 (coating).

Example 8

The microbiological degradation times of a sample of milk preserved in two PET bags with coating of filler from sample 1 and from sample 2 were measured. The bag with filler from sample 2 exhibited a longer shelf life than the one with the filler from sample 1, proving that sample 2 was more effective also in the coating.

Bags measuring 300 $cm^2$ of PET+12%LDH-sal (sample 1) and of PET+12%LDH-sal (sample 2) were prepared, each of which was filled with 15 ml of full fat fresh milk. In order to determine the packaging activity of the films, the bacterial load of the milk was determined using methylene blue reductase. The tests were conducted at zero time ($t_0$), on the expiration date of the milk ($t_1$), after one ($t_2$) and after three days from expiration ($t_3$).

The values indicated are the average results of the tests conducted on two test specimens.

| Sample | $t_0$ | $t_1$ | $t_2$ | $t_3$ | Good until |
|---|---|---|---|---|---|
| PET+12% LDH-sal Sample 1 | excellent | good | poor | poor | $t_1$ |
| PET+12% LDH-sal Sample 2 | excellent | excellent | good | good | $t_3$ |

The best results in terms of control of the bacterial load were obtained with packagings obtained with PET film+12%LDH-sal from sample 2

Examples 9-15

Different hydrotalcites, (ZnAlLDH)-active molecule, were synthesized as indicated below.

9. salicylic acid

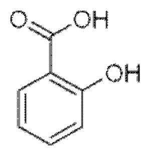

10. *p*OH-Benzoic acid

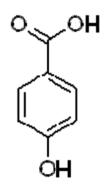

11. aleuritic acid

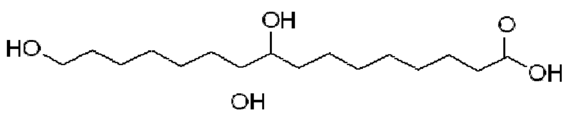

12. citric acid

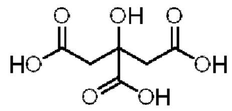

13. glycolic acid

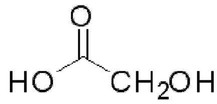

14. serine

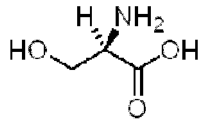

15. 2.2-bis-hydroxymethyl-propionic acid

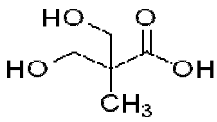

The preparation method of LDH-anion was that of co-precipitation.

An aqueous solution of $Zn(NO_3)_2 \cdot 6H_2O$ and $Al(NO_3)_3 \cdot 9H_2O$ was added rapidly to a solution of the sodium salt of the anion at ambient temperature, under stirring and under nitrogen flow. The pH slowly reached the value of 7.5 with the addition, at ambient temperature and under nitrogen, of a solution of NaOH 1.5M using an automatic titrator, operating at a flow of 100μl every 20". At the end of the reaction time, the product was vacuum filtered, washed repeatedly with decarbonated water and left in a vacuum oven at 50°C. The product was left for a further 5h at 125°C. 5 g of a white compound was obtained. The solid was characterized using X-ray, IR, TGA and elemental analysis.

Characterization of the LDH-active molecule modified hydrotalcites

Elemental analysis to determine the formula

Elemental analysis was carried out to identify the percentage of the elements in the hydrotalcite and thus obtain the chemical formula: Zn and Al were identified using as atomic absorption as technique, after having dissolved the samples in concentrated nitric acid; C, N and H were identified using an Elemental Analyzer.

X-rays

The X-ray diffraction spectra (XRPD) on the powders were carried out with a Bruker diffractometer (equipped with a continuous scan attachment and proportional counter). The measurements were taken at ambient temperature with an automatic powder diffractometer with vertical focusing goniometer, and detection system with scintillation counter. The monochromatic radiation used was the Kα of Cu, filtered with an Ni layer (λ = 1.54050Å), obtained by supplying power to the tube at 40 kV and 40 mA. The diffraction spectrum, which indicates the scattering intensity as a function of the diffraction angle 2θ, is obtained with a scanning speed of 2°θ/min in an interval of 2θ ranging from 2° to 40°, step scan 0.05° and counting time 3sec.

FTIR

Infrared spectroscopy measurements (FT-IR) were made using a model Vertex 70 Perkin Elmer spectrophotometer. Spectra with a resolution of 2 $cm^{-1}$ were obtained, collecting 32 scans for each sample. The region of the

spectrum investigated was between 400 $cm^{-1}$ and 4000 $cm^{-1}$ and absorbance is registered.

This spectrophotometer allowed to obtain the absorbance directly as a function of the wave number. The absorbance is defined by the following equation:

$$A = log_{10} ( I_o/I) = a\delta C$$

where Io and I are respectively the intensity of the incident and transmitted light, *a* is the absorption coefficient or absorptivity, δ is the thickness and *C* is the concentration of absorbance units.

Thermogravimetry

Thermogravimetric analysis of the samples were conducted in air with a Mettler TC 10 instrument interfaced with a PC with Mettler data acquisition software, performing scans from 30 to 1000 °C with scanning speed of 5 °C/min.

The decomposition temperatures (Td) were evaluated as midpoint value of the degradation step.

Example 16

Fig. 6 shows as example representing all the synthesized hydrotalcites the X-ray diffractogram of the hydrotalcite intercalated with citric acid anion according to Example 12. The other synthesized LDHs behaved analogously.

Formula obtained from elemental analysis

$$[Zn_{0.72}Al_{0.35}(OH)_2](NO_3)_{0.03}(C_6O_7H_5)_{0.45}\cdot 1H_2O \quad X=M^{III}/M^{III}+M^{II}= 0.33$$

Example 17

Incorporation of LDH-active molecule in Polyethylene (PE)

Low density Polyethylene and 3% of LDH-active molecule were used.

The incorporation technique used was High Energy Ball Milling (HEBM) (mixing in a mill with hard balls at ambient temperature and without solvent); this technique involved repeated events of mechanical energy transfer from a milling system formed by metal or ceramic balls to the material to be milled. During milling, the particles of powder break, smooth surfaces are formed, the atoms scatter and bond.

The following samples were prepared with the hydrotalcites synthesized using the co-precipitation method. The structural and thermal properties were compared and mechanical and barrier properties were studied.

- PE+3% LDH-pOH-benzoate
- PE+3% LDH-haleurate
- PE+3% LDH-salicylate
- PE+3% LDH-glycolate
- PE+3% LDH-serine
- PE+3% LDH-2.2-bis-hydroxymethyl-propionate
- PE+3% LDH-citrate

Example 18

The mechanical properties of the hydrotalcites prepared in Ex. 17 were evaluated from the stress-strain curves obtained using an Instron 4301 dynamometric instrument. To obtain the stress-strain curves the stretching speed used was 10mm/s at ambient temperature. The elastic moduli were obtained from the linear area of stress-strain curves giving the sample a deformation of 0.1%.

The Table shows the data relating to analysis of the stress-strain curves and tensile modulus, stress and elongation at break, stress and elongation at yield were determined. The mechanical parameters are correlated both to

the inorganic phase content and to the morphology.

| SAMPLE | E (Mpa) | $\sigma_y$ (MPa) | $\varepsilon_y$ (mm/mm) (%) | $\sigma_b$ (MPa) | $\varepsilon_b$ (mm/mm) (%) |
|---|---|---|---|---|---|
| PE | 128 | 4.09 | 3.21 | 9.13 | 381 |
| PE+3% LDH-pOHBz | 219 | 4.81 | 3.20 | 6.54 | 311 |
| PE+3% LDH-Haleurate | 146 | 3.48 | 3.19 | 5.01 | 184 |
| PE+3%LDH-salicylate | 203 | 3.54 | 3.18 | 4.10 | 130 |
| PE+3%LDH-glycolate | 148 | 4.76 | 3.22 | 5.45 | 113 |
| PE+3% LDH-serine | 193 | 4.02 | 3.38 | 6.08 | 246 |
| PE+3% LDH-2,2-bis propionic acid | 189 | 3.58 | 3.23 | 4.45 | 156 |
| PE+3% LDH-citrate | 145 | 3.47 | 3.16 | 5.03 | 182 |

The mechanical properties exhibited an increase in mechanical modulus of 15-30% in all the compounds, which thus exhibit an improvement of their mechanical strength.
The oxygen diffusion is shown in the graph of Fig. 7. A decrease of diffusion for all the samples, with different intensity, can be noted.

Example 19

Incorporation of LDH-active molecule in Polyethylene Terephtalate (PET)

Different LDH-active molecule were incorporated in PET at 3% (w/w) through HEBM. The samples obtained were:

- PET+3% LDH-salicylate
- PET+3% LDH-aleurate
- PET+3% LDH-pOH-benzoate
- PET+3% LDH-glycolate
- PET+3% LDH-serine
- PET+3% LDH-2.2-bis-hydroxymethyl-propionate
- PET+3% LDH-citrate

Example 20

The oxygen permeability was lower in all cases, as shown in Fig. 8.

Example 21

As example of the improved oxygen barrier properties of the PET+LDH-sal films Fig. 9 shows an image of experiments conducted with apples in glass vials closed by PET film as is (number 1) and PET+LDH-sal (number 2, 3 and 4) after 6 months. As can be noted from the difference in colour and appearance, the pieces of apple contained in vials closed by PET+LDH-sal films did not exhibit signs of oxidation and moulds that were evident in the piece of apple, darker and moldy, in vial number 1.

Example 22

Coating on PET with acrylic dispersant containing LDH-active molecule

Various PET films were prepared with the coating technique with different percentages of LDH-sal mixed with a thermosetting acrylic adhesive used in the food field for coating polymers such as polyesters and polyolefins. A mixture of LDH-active molecule and LDH-carbonate was used with a composition of 3% of LDH-carbonate, 6% of LDH-sal, 3% of sodium salicylate. The polymeric adhesive was a copolymer ethylmethacrylate - methylmethacrylate with a solid

content of 38% wt. dispersed in a diluent methyl-ethyl-ketone.

In the X-ray diffractogram of Fig. 10 the characteristic peak of the hydrotalcite salicylate can be noted around $2\theta=5.84°$, which shows incorporation of the hybrid in the acrylic adhesive and then on the surface of the PET.

Example 23

Application of the system PET+(adhesive/LDH-active molecule) on increasing the shelf life

of mozzarella cheese.

The PET-coating+LDH-active molecule film system was experimented on fresh foods such as mozzarella cheese to evaluate increase of the shelf life of the food. Watery fresh foods such as dairy produce are very sensitive to bacteria such as coliform and pseudomonas, and to fungi, which are mainly responsible for their degradation.

Bags were prepared with PET+adhesive (control) and PET+adhesive of Ex. 22, containing the active system (6%LDH-sal + 3%LDH-carbonate + 3%sodium salicylate) filled with small mozzarellas and preserved at 8°C with preserving liquid.

The procedure followed is set down below:

1. Drawing off the preserving water and homogenization of the mozzarella at different times: at the start time $t_0$, after 8h, 24h, 48h, 72h, 6 days, 10 days, 15 days, 20 days up to 30 days.
2. Measuring the pH both of the preserving water and of the mozzarella.
3. Analyzing the organoleptic properties (colour, smell, taste)
4. Analyzing for microorganisms, yeasts and molds with selective culture media for each type of microorganism (PCA, MRS, M17, VRB, Pseudomonas, YEPD).
5. Measuring the total bacterial count, the total coliforms, pseudomonas, streptococci, lactic bacteria, lactobacilli, yeasts and fungi.

Variation of the pH

As can be noted from Fig. 11, there is a difference between the pH of the mozzarella contained in the bag with PET+adhesive and the one in the bag with PET+adhesive containing the active system (6%LDH-sal + 3%LDH-carbonate + 3%sodium salicylate). The pH of the mozzarella contained in the packaging with the antimicrobial and the carbonate is more basic in the first 48h and then between 48h and 72h there is a decrease toward more acid pH, which can be correlated to the growth of microorganisms that tend to acidify the environment of the mozzarella.

Growth of fungi and yeasts

With regard to the growth of fungi and yeasts, as can be noted in Fig. 12, this was greatly inhibited by the antimicrobial present in the coating of the bag, after 15 days (Fig.12a). The total bacterial growth in the mozzarella inside the package containing salicylate was also much lower compared to the one contained in the PET as is (Fig.12b).

Example 24

Application of the system PET+(adhesive/LDH-active molecule) on increasing the shelf life

of fresh milk

In this example a composition containing LDH-sal according to the invention (single stage method of co-precipitation) and a composition containing LDH-sal obtained using the method described in WO 2010/016034 were compared.

The "methylene blue reductase" method was used for the comparison.

Methylene blue reductase

This method is representative of the hygiene conditions of a sample of milk. It is based on the ability of microorganisms to lower the redox potential of the medium in which they are contained as a consequence of their metabolic activity (oxygen consumption and production of reducing substances). The addition of a redox indicator (such as methylene blue or resazurin) indicates, with its change of colour, the state of oxidation or reduction of the medium. Methylene

blue is blue in an oxidized environment and colourless in a reduced environment: the shorter the reduction time of the indicator (blue --> colourless) is, the higher the bacterial load present is and the worse the quality of the milk is.

Preparation of the reagent

8.8 mg of powdered methylene blue were dissolved in 800 ml of distilled water.

Implementation technique

10.0 ml of each sample of milk were inserted into two test tubes.

- 1.0 ml of methylene blue solution was added to each test tube.
- The test tubes were placed in the thermostatic bath at 37°C.
- The start time was noted and checked at regular intervals, noting down the observations. Readings were taken after 20' of incubation and then every hour.

The quality of the milk based on the reduction time is indicated in the Table below.

| **Reduction time** | **Judgment** |
|---|---|
| > 6 hours | Excellent |
| 4 - 6 hours | Good |
| 2 - 4 hours | Poor |
| < 2 hours | Bad |

The two films were compared:

PET+12%LDH-sal obtained with the method of the invention according to Ex. 1.
PET+12%LDH-sal obtained with the method according to Ex. 2 for comparison.

To compare the two films, 8 bags measuring 300 $cm^2$ of PET+12%LDH-sal from sample 1 were prepared, each of which was filled with 15 ml of full fat fresh milk. In order to determine the package activity of the films, the pH of the milk was evaluated using a pH meter and the bacterial load of the milk was evaluated using methylene blue reductase. The results obtained were compared with tests conducted previously with PET+12%LDHSal films of sample 2.

pH measurement

The values indicated in the Table below were obtained from the average results of tests conducted on two test specimens.

| Sample | to | $t_1$ | $t_2$ | $t_3$ | $t_4$ |
|---|---|---|---|---|---|
| PET +12%LDH-sal Sample 1 | 6.64 | 6.635 | 6.62 | 6.265 | 5.65 |
| PET +12%LDH-sal Sample 2 | 6.72 | 6.70 | 6.67 | 6.55 | 6.31 |

Bacterial load

The values indicated in the Table below were obtained from the average results of tests conducted on two test specimens.

| Reduction time (judgment) | | | | | |
|---|---|---|---|---|---|
| Sample | $t_0$ | $t_1$ | $t_2$ | $t_3$ | $t_4$ |
| PET+12%LDH-sal Sample 1 | excellent | good | good | bad | Bad |
| PET+12%LDH-sal Sample 2 | excellent | excellent | good | good | Good |

The data indicated above shows that the PET+12%LDH-sal films sample 1 gave worse results both with regard to the pH control and with regard to the bacterial load of the milk, and therefore had a worse package activity with respect to the PET+12%LDH-sal films of sample 2.

Example 25

Global migration tests on bulk films in aqueous and alcohol environment

Global migration tests were conducted in accordance with EC Regulation No. 1935/2004, according to which the material with which the packaging is made must not transfer to the food a quantity of its components above a certain limit.

Standards of a general character regarding the suitability of an object intended to come into contact with foods are present in the EC regulation No. 1935/2004 of the European Parliament dated 27 October 2004. One point in particular of this decree must be highlighted, namely *"new types of materials and articles designed to actively maintain or improve the condition of the food (active food contact materials and articles) are not inert by their design, unlike traditional materials and articles intended to come into contact with food".*

To check that the migration limits are not exceeded, laboratory tests are conducted with the packagings or with test specimens of their material making use of simulant solvents. Four solutions that simulate the extraction capacity of the foods and which are listed in the table below. The simulants are selected on the basis of the use for which the material is intended. In the general case of materials and objects intended to come into contact with food products of any type, the tests are conducted using the simulants B, C and D, considered the most rigorous and using in each test a new sample or test specimen.

| Name | Composition | Use |
|---|---|---|
| **Simulant A** | Distilled water or water of equivalent quality | For aqueous food products with pH > 4.5 |
| **Simulant B** | Acetic acid at 3% (p/v) in water | For watery food products with pH 4.5 |
| **Simulant C** | Ethanol at 10% (v/v) in water (or equal to the effective content) | For products containing alcohol |
| **Simulant D** | Rectified olive oil (or other fatty simulants) | For food products based on fatty substances |
| **None** | | For dried products |
| Limits: simulant D: 20mg/kg or 3 mg/dm$^2$, for all the others: 12mg/kg or 2 mg/dm$^2$ | | |

The test conditions were: 10 days at T=40°C, and 2 hours at T=70°C, for a real use t >24h. The materials were completely immersed in the liquids.

• **Simulant B and C**

The surface/volume ratio (cm$^2$/ml) must be between 0.5 and 2, as established by the standard. At the end of the contact time, the simulant liquid from the contact test is evaporated to a small volume, then transferred to a capsule in which evaporation of the solvent is completed in a water bath. The last traces of the solvent are eliminated in the oven at 105 °C until constant weight. The residue is cooled and placed in a dryer for around 30 min and weighed. A blank test is also conducted, evaporating the same quantity of solvent and subtracting the weight of this residue from that obtained from the sample. Calculation of global migration is obtained as follows:

$$M = \frac{m}{s}$$

where:

m= weight of the residue in mg;

s= area of the sample in $dm^2$.

**Test conditions (time/temperature)**

The samples of polyethylene (LDPE) were prepared dispersing in the polymer, through HEBM, the LDH-sal prepared with the method of the invention. Migration tests were conducted choosing from the times and the temperatures established in the standard, taking into account the worst foreseeable conditions for use of the packaging. Therefore, if the material was intended for contact with a food product according to a combination of two or more of the times and temperatures established, the test was conducted by subjecting the sample in succession to all the worst foreseeable conditions: 10 days at 40°C and 2 hours at 70°C. The tests were conducted on circular test specimens with a diameter of 5 cm immersed in 30 ml of solution of simulant liquids (acetic acid and ethanol) so that the surface/volume ratio ($cm^2$/ml) was between 0.5 and 2. The results are the average results implemented on 5 test specimens of the same sample. The samples on which the test was conducted were:

- LDPE
- LDPE with 1% wt/wt of LDH-sal;
- LDPE with 3% wt/wt of LDH-sal.

**Acetic acid at 3% (p/v)**

| | Residue [$mg/dm^2$] |
|---|---|
| LDPE | 0,36 |
| 1% | 1,93 |
| 3% | 1,86 |

Legal limit

< 2 $mg/dm^2$

**Ethanol at 10% (v/v)**

| | Residue [$mg/dm^2$] |
|---|---|
| LDPE | 1,67 |
| 1% | 1,89 |
| 3% | 1,58 |

Legal limit

< 2 $mg/dm^2$

Global migration tests are an important instrument for verifying the suitability of any polymeric and non-polymeric material intended to come into contact with foods. The method ensures that, when the packaging has a residue value of below the limits established by the standard, the consumer ingests only the food and no extraneous matter, even if these are nontoxic. The tests conducted showed that the materials complied with the limits established by law.

## Claims

**1.** Process for manufacturing a polymer composition comprising:

a) Preparing a hydrotalcite intercalated with active molecules, having the formula (I)

$$[M(II)_{1-x}M(III)_x(OH)_2]^{x+}[A^{n-}_{x/n}]^{x-}\cdot mS \qquad (I)$$

wherein:

M(II) = Mg, Zn, Cu, Mn, Co, Fe, Ni;
M(III) = Al, Mn, Fe, Co, Ni, Cr, Ga;
x = 0.2-0.4;
$A^{n-}$ is the intercalated anion of the active molecule with charge n-;
m = number of molecules of co-intercalated solvent (S);
S = co-intercalated solvent
said hydrotalcite intercalated with active molecules being prepared by reacting in a single step a solution of salts of the metals M(II) and M(III) with a solution containing the anion $A^{n-}$ of the active molecule A, at a temperature between 10 and 60 °C and at a pressure between 90 and 110 KPa, and by adjusting the pH of the solution to ≥ 7 to cause precipitation of the intercalated hydrotalcite thus formed,
said single reaction step being followed by the steps of collecting the precipitated intercalated hydrotalcite, washing it with water and drying it until it contains less than 5% wt. of liquid;

b) Dispersing said hydrotalcite that contains less than 5% wt. of liquid and is intercalated with active molecules in a polymer matrix that contains less than 5% wt. of water;

**characterized in that**:

- said hydrotalcite intercalated with active molecules has a Powder X-Ray Diffraction (PXRD) pattern in which the reflection peaks at 2θ degrees lower than 12° 2θ have a width measured at half-height of the peak of ≥2° 2θ; and
- said polymer composition is prepared by dispersing said hydrotalcite that contains less than 5% wt. of liquid in said polymer matrix that contains less than 5% wt. of water; and
- said active molecule is selected from the group consisting of antimicrobial, antioxidants, antimycotics; and
- said active molecule is present in a quantity between 1-50% by weight with respect to the hydrotalcite.

2. Process according to claim 1, **characterized in that** the preparation of said hydrotalcite in a single reaction step comprises adjusting the pH of the solution to ≥ 7by means of the addition of a solution of an alkaline hydroxide.

3. Process according to claim 2, **characterized in that** said reaction is conducted at a temperature between 15 and 30°C and under a flow of inert gas.

4. Process according to one or more of the preceding claims, **characterized in that** in said hydrotalcite of general formula (I) M(II) = Mg or Zn, M(III) = Al, S = $H_2O$.

5. Process according to any one of claims 1-4, **characterized in that** said polymer matrix is a thermoplastic polymer.

6. Polymer composition comprising a polymer matrix in which a hydrotalcite (I) intercalated with active molecules is dispersed

$$[M(II)_{1-x}M(III)_x(OH)_2]^{x+}[A^{n-}_{x/n}]^{x} \cdot mS \qquad (I)$$

wherein:

M(II) = Mg, Zn, Cu, Mn, Co, Fe, Ni;
M(III) = Al, Mn, Fe, Co, Ni, Cr, Ga;
x = 0.2-0.4;
$A^{n-}$ is the intercalated anion of the active molecule with charge n-;
m = number of molecules of co-intercalated solvent (S);
S = co-intercalated solvent;

**characterized in that**:

- said hydrotalcite intercalated with active molecules has a Powder X-Ray Diffraction (PXRD) pattern in which the reflection peaks at 2θ degrees lower than 12° 2θ have a width measured at half-height of the peak of ≥2° 2θ;
- said hydrotalcite contains less than 5% wt. of liquid and said polymer matrix contains less than 5% wt. of water;

- said active molecule is selected from the group consisting of antimicrobial, antioxidants, antimycotics;
- said active molecule is present in a quantity between 1-50% by weight with respect to the hydrotalcite.

**7.** Polymer composition according to claim 6, **characterized in that** it comprises 50-99% by weight of polymer, preferably 60-90% by weight of polymer, and 1-50 % by weight of intercalated hydrotalcite, preferably 40-10% by weight of intercalated hydrotalcite.

**8.** Polymer composition according to claim 6 or 7, **characterized in that** the quantity of active molecule with respect to the hydrotalcite component is given by the following expression:

$$\text{Charge } (g/g) = \alpha \bullet PM/(PF + \alpha \bullet PM)$$

wherein:

- $\alpha$ is the degree of intercalation, defined as number of moles of active molecule intercalated and/or absorbed by 1 mol of hydrotalcite,
- PM is the molecular weight (g/mol) of the active molecule A,
- PF is the molecular weight (g/mol) of the hydrotalcite without the active molecule A.

**9.** Polymer compositions according to any claims 6-8, **characterized in that** said polymer is a thermoplastic polymer.

**10.** Shaped articles in the form of packagings for the preservation of food products comprising the polymer composition according to any one of claims 6-9.

**11.** Coating composition **characterized by** comprising a hydrotalcite of Formula (I) as defined in claim 1 or 6, dispersed in an adhesive polymer.

**12.** Coating composition according to claim 11 **characterized by** comprising a diluent or a solvent for said adhesive polymer.

**13.** Coating composition **characterized by** comprising a hydrotalcite of Formula (I) as defined in claim 1 or 6 and one or more precursors of an adhesive polymer, in which said one or more precursors of said adhesive polymer and said hydrotalcite of Formula (I) are dissolved or dispersed in a liquid medium.

**14.** Coating composition according to claim 11, **characterized in that** said adhesive polymer is selected from the group consisting of epoxy resins, vinyl resins, acrylic resins, ketonic resins, hydrogenated hydrocarbon resins and urea-aldehyde resins.

**Patentansprüche**

**1.** Verfahren zur Herstellung einer Polymer-Zusammensetzung, umfassend:

a) Herstellen eines eingelagerte Wirkstoffmoleküle aufweisenden Hydrotalcits, das die Formel (I) aufweist

$$[M(II)_{1-x}M(III)_x(OH)_2]^{x+}[A^{n-}_{x/n}]^{x}\bullet mS \qquad (I)$$

wobei:

M(II) = Mg, Zn, Cu, Mn, Co, Fe, Ni;
M(III) = Al, Mn, Fe, Co, Ni, Cr, Ga;
x = 0,2-0,4;
$A^{n-}$ das eingelagerte Anion des Wirkstoffmoleküls mit einer Ladung n- ist;
m = Anzahl von Molekülen von gemeinsam eingelagertem Lösungsmittel (S);
S = gemeinsam eingelagertes Lösungsmittel
wobei das eingelagerte Wirkstoffmoleküle aufweisende Hydrotalcit in einem einzigen Schritt durch Umsetzen einer Lösung von Salzen der Metalle M(II) und M(III) mit einer das Anion $A^{n-}$ des Wirkstoffmoleküls A

enthaltenden Lösung bei einer Temperatur zwischen 10 und 60 °C und bei einem Druck zwischen 90 und 110 KPa und durch Einstellen des pH der Lösung auf ≥ 7 zum Veranlassen von Ausfällung des so gebildeten Einlagerungen aufweisenden Hydrotalcits hergestellt wird, wobei dem einzigen Reaktionsschritt die Schritte von Sammeln des ausgefällten, Einlagerungen aufweisenden Hydrotalcits, Waschen desselben mit Wasser und Trocknen desselben, bis es weniger als 5 Gew.-% Flüssigkeit enthält, folgen;

b) Dispergieren des Hydrotalcits, das weniger als 5 Gew.-% Flüssigkeit enthält und eingelagerte Wirkstoffmoleküle in einer Polymermatrix enthält, die weniger als 5 Gew.-% Wasser enthält;

**dadurch gekennzeichnet, dass**:

- das eingelagerte Wirkstoffmoleküle aufweisende Hydrotalcit ein Pulver-Röntgen-Beugungs (PXRD)-Muster aufweist, in dem die Reflexionspeaks bei 2Θ Grad geringer als 12° 2Θ eine Breite, gemessen bei halber Höhe des Peaks, von ≥2° 2 Θ aufweisen; und
- die Polymer-Zusammensetzung durch Dispergieren des Hydrotalcits, das weniger als 5 Gew.-% Flüssigkeit enthält, in der Polymermatrix, die weniger als 5 Gew.-% Wasser enthält, hergestellt wird; und
- das Wirkstoffmolekül ausgewählt ist aus der Gruppe, bestehend aus antimikrobiellem Mittel, Antioxidantien, Antimykotika; und
- das Wirkstoffmolekül in einer Menge zwischen 1-50 % auf das Gewicht hinsichtlich des Hydrotalcits vorliegt.

2. Verfahren nach Anspruch 1, **dadurch gekennzeichnet, dass** die Herstellung des Hydrotalcits in einem einzigen Reaktionsschritt Einstellen des pH der Lösung auf ≥ 7 mit Hilfe der Zugabe einer Lösung eines alkalischen Hydroxids umfasst.

3. Verfahren nach Anspruch 2, **dadurch gekennzeichnet, dass** die Reaktion bei einer Temperatur zwischen 15 und 30°C und unter einem Inertgasstrom durchgeführt wird.

4. Verfahren nach einem oder mehreren der vorstehenden Ansprüche, **dadurch gekennzeichnet, dass** in dem Hydrotalcit der allgemeinen Formel (I) M(II) = Mg oder Zn, M(III) = Al, S = $H_2O$.

5. Verfahren nach einem von Ansprüchen 1-4, **dadurch gekennzeichnet, dass** die Polymermatrix ein thermoplastisches Polymer ist.

6. Polymer-Zusammensetzung, umfassend eine Polymermatrix, in die ein eingelagerte Wirkstoffmoleküle aufweisendes Hydrotalcit (I) dispergiert ist

$$[M(II)_{1-x}M(III)_x(OH)_2]^{x+}[A^{n-}{}_{x/n}]^{x-}\bullet mS \qquad (I)$$

wobei:

M(II) = Mg, Zn, Cu, Mn, Co, Fe, Ni;
M(III) = Al, Mn, Fe, Co, Ni, Cr, Ga;
x = 0,2-0,4;
$A^{n-}$ das eingelagerte Anion des Wirkstoffmoleküls mit einer Ladung n- ist;
m = Anzahl von Molekülen von gemeinsam eingelagertem Lösungsmittel (S);
S = gemeinsam eingelagertes Lösungsmittel;

**dadurch gekennzeichnet, dass**:

- das eingelagerte Wirkstoffmoleküle aufweisende Hydrotalcit ein Pulver-Röntgen-Beugungs (PXRD)-Muster aufweist, in dem die Reflexionspeaks bei 2Θ Grad geringer als 12° 2Θ eine Breite, gemessen bei halber Höhe des Peaks, von ≥2° 2 Θ aufweisen;
- das Hydrotalcit weniger als 5 Gew.-% Flüssigkeit enthält und die Polymermatrix weniger als 5 Gew.-% Wasser enthält;
- das Wirkstoffmolekül ausgewählt ist aus der Gruppe, bestehend aus antimikrobiellem Mittel, Antioxidantien, Antimykotika;
- das Wirkstoffmolekül in einer Menge zwischen 1-50 % auf das Gewicht hinsichtlich des Hydrotalcits vorliegt.

7. Polymer-Zusammensetzung nach Anspruch 6, **dadurch gekennzeichnet, dass** sie 50-99 % auf das Gewicht Polymer, vorzugsweise 60-90 % auf das Gewicht Polymer und 1-50 % auf das Gewicht Einlagerungen aufweisendes Hydrotalcit, vorzugsweise 40-10 % auf das Gewicht Einlagerungen aufweisendes Hydrotalcit umfasst.

8. Polymer-Zusammensetzung nach Anspruch 6 oder 7, **dadurch gekennzeichnet, dass** die Menge an Wirkstoffmolekül hinsichtlich der Hydrotalcit-Komponente durch den nachstehenden Ausdruck angegeben wird:

$$\text{Ladung } (g/g) = \alpha \bullet PM/(PF + \alpha \bullet PM)$$

wobei:

- $\alpha$ der Einlagerungsgrad ist, definiert als Molzahl an Wirkstoffmolekül, die von 1 Mol Hydrotalcit eingelagert und/oder absorbiert sind,
- PM das Molekulargewicht (g/Mol) des Wirkstoffmoleküls A ist,
- PF das Molekulargewicht (g/Mol) von dem Hydrotalcit ohne das Wirkstoffmolekül A ist.

9. Polymer-Zusammensetzungen nach einem der Ansprüche 6-8, **dadurch gekennzeichnet, dass** das Polymer ein thermoplastisches Polymer ist.

10. Formgegenstände in Form von Verpackungen zur Konservierung von Lebensmittel-Produkten, umfassend die Polymer-Zusammensetzung nach einem von Ansprüchen 6-9.

11. Beschichtungs-Zusammensetzung, **gekennzeichnet durch** das Umfassen eines Hydrotalcits der Formel (I), wie in Anspruch 1 oder 6 definiert, dispergiert in einem Klebstoffpolymer.

12. Beschichtungs-Zusammensetzung nach Anspruch 11, **gekennzeichnet durch** das Umfassen eines Verdünnungsmittels oder eines Lösungsmittels für das Klebstoffpolymer.

13. Beschichtungs-Zusammensetzung, **gekennzeichnet durch** das Umfassen eines Hydrotalcits der Formel (I), wie in Anspruch 1 oder 6 definiert, und einer oder mehrerer Vorstufen von einem Klebstoffpolymer, in dem die eine oder mehreren Vorstufen von dem Klebstoffpolymer und dem Hydrotalcit der Formel (I) in einem flüssigen Medium gelöst oder dispergiert sind.

14. Beschichtungs-Zusammensetzung nach Anspruch 11, **dadurch gekennzeichnet, dass** das Klebstoffpolymer aus der Gruppe, bestehend aus Epoxid-Harzen, Vinyl-Harzen, AcrylHarzen, Keton-Harzen, hydrierten Kohlenwasserstoff-Harzen und Harnstoff-Aldehyd-Harzen, ausgewählt ist.

## Revendications

1. Procédé de fabrication d'une composition de polymère comprenant :

(a) préparer une hydrotalcite intercalée avec des molécules actives, ayant la formule (I)

$$[M(II)_{1-x}M(III)_x(OH)_2]^{x+}[A^{n-}{}_{x/n}]^{x} \cdot mS \qquad (I)$$

dans laquelle :

M(II) = Mg, Zn, Cu, Mn, Co, Fe, Ni ;
M(III) = Al, Mn, Fe, Co, Ni, Cr, Ga ;
x = 0,2 à 0,4 ;
$A^{n-}$ est l'anion intercalé de la molécule active avec une charge n- ;
m = nombre de molécules de solvant co-intercalé (S) ;
S = solvant co-intercalé
ladite hydrotalcite intercalée avec des molécules actives étant préparée en faisant réagir en une seule étape une solution de sels des métaux M(II) et M(III) avec une solution contenant l'anion $A^{n-}$ de la molécule active A, à une température entre 10 et

60°C et à une pression entre 90 et 110 KPa, et en ajustant le pH de la solution à ≥7 pour provoquer la précipitation de l'hydrotalcite intercalée ainsi formée, ladite seule étape de réaction étant suivie par les étapes de collecte de l'hydrotalcite intercalée précipitée, son lavage avec de l'eau et son séchage jusqu'à ce qu'elle contienne moins de 5 % en poids de liquide ;

b) disperser ladite hydrotalcite qui contient moins de 5 % en poids de liquide et est intercalée avec des molécules actives dans une matrice polymère qui contient moins de 5 % en poids d'eau ;

**caractérisé en ce que** :

- ladite hydrotalcite intercalée avec des molécules actives a un motif de diffraction de rayons X sur poudre (PXRD) dans lequel les pics de réflexion à degrés 2θ inférieurs à 12° 2θ ont une largeur mesurée à mi-hauteur du pic ≥2° 2θ ; et
- ladite composition de polymère est préparée en dispersant ladite hydrotalcite qui contient moins de 5 % en poids de liquide dans ladite matrice polymère qui contient moins de 5 % en poids d'eau ; et
- ladite molécule active est sélectionnée dans le groupe constitué des antimicrobiens, des antioxydants, des antimycotiques ; et
- ladite molécule active est présente en une quantité entre 1 à 50 % en poids par rapport à l'hydrotalcite.

**2.** Procédé selon la revendication 1, **caractérisé en ce que** la préparation de ladite hydrotalcite en une seule étape de réaction comprend l'ajustement du pH de la solution à ≥7 au moyen de l'ajout d'une solution d'un hydroxyde alcalin.

**3.** Procédé selon la revendication 2, **caractérisé en ce que** ladite réaction est conduite à une température entre 15 et 30°C et sous un flux de gaz inerte.

**4.** Procédé selon l'une ou plus des revendications précédentes, **caractérisé en ce que** dans ladite hydrotalcite de formule générale (I) M(II) = Mg ou Zn, M(III) = Al, S = $H_2O$.

**5.** Procédé selon l'une quelconque des revendications 1 à 4, **caractérisé en ce que** ladite matrice polymère est un polymère thermoplastique.

**6.** Composition de polymère comprenant une matrice polymère dans laquelle une hydrotalcite (I) intercalée avec des molécules actives est dispersée

$$[M(II)_{1-x}M(III)_x(OH)_2]^{x+}[A^{n-}{}_{x/n}]^{x} \cdot mS \qquad (I)$$

dans laquelle :

M(II) = Mg, Zn, Cu, Mn, Co, Fe, Ni ;
M(III) = Al, Mn, Fe, Co, Ni, Cr, Ga ;
x = 0,2 à 0,4 ;
$A^{n-}$ est l'anion intercalé de la molécule active avec une charge n- ;
m = nombre de molécules de solvant co-intercalé (S) ;
S = solvant co-intercalé ;

**caractérisée en ce que** :

- ladite hydrotalcite intercalée avec des molécules actives a un motif de diffraction de rayons X sur poudre (PXRD) dans lequel les pics de réflexion à degrés 2θ inférieurs à 12° 2θ ont une largeur mesurée à mi-hauteur du pic ≥2° 2θ ;
- ladite hydrotalcite contient moins de 5 % en poids de liquide et ladite matrice polymère contient moins de 5 % en poids d'eau ;
- ladite molécule active est sélectionnée dans le groupe constitué des antimicrobiens, des antioxydants, des antimycotiques ;
- ladite molécule active est présente en une quantité entre 1 à 50 % en poids par rapport à l'hydrotalcite.

**7.** Composition de polymère selon la revendication 6, **caractérisée en ce qu'**elle comprend 50 à 99 % en poids de polymère, de préférence 60 à 90 % en poids de polymère, et 1 à 50 % en poids d'hydrotalcite intercalée, de préférence

40 à 10 % en poids d'hydrotalcite intercalée.

**8.** Composition de polymère selon la revendication 6 ou 7, **caractérisée** en que la quantité de molécule active par rapport au composant hydrotalcite est donnée par l'expression suivante :

$$\text{Charge } (g/g) = \alpha \cdot PM/(PF + \alpha \cdot PM)$$

dans laquelle :

- $\alpha$ est le degré d'intercalation, défini comme le nombre de moles de molécule active intercalée et/ou absorbée par 1 mol d'hydrotalcite,
- PM est le poids moléculaire (g/mol) de la molécule active A,
- PF est le poids moléculaire (g/mol) de l'hydrotalcite sans la molécule active A.

**9.** Compositions de polymère selon l'une quelconque des revendications 6 à 8, **caractérisée en ce que** ledit polymère est un polymère thermoplastique.

**10.** Articles façonnés sous la forme d'emballages pour la conservation de produits alimentaires comprenant la composition de polymère selon l'une quelconque des revendications 6 à 9.

**11.** Composition de revêtement **caractérisée en ce qu'**elle comprend une hydrotalcite de Formule (I) telle que définie dans la revendication 1 ou 6, dispersée dans un polymère adhésif.

**12.** Composition de revêtement selon la revendication 11 **caractérisée en ce qu'**elle comprend un diluant ou un solvant pour ledit polymère adhésif.

**13.** Composition de revêtement **caractérisée en ce qu'**elle comprend une hydrotalcite de Formule (I) telle que définie dans la revendication 1 ou 6 et un ou plusieurs précurseurs d'un polymère adhésif, dans laquelle ledit un ou plusieurs précurseurs dudit polymère adhésif et ladite hydrotalcite de Formule (I) sont dissous ou dispersés dans un milieu liquide.

**14.** Composition de revêtement selon la revendication 11, **caractérisée en ce que** ledit polymère adhésif est sélectionné dans le groupe constitué des résines époxy, des résines vinyliques, des résines acryliques, des résines cétoniques, des résines hydrocarbonées hydrogénées et des résines urée-aldéhyde.

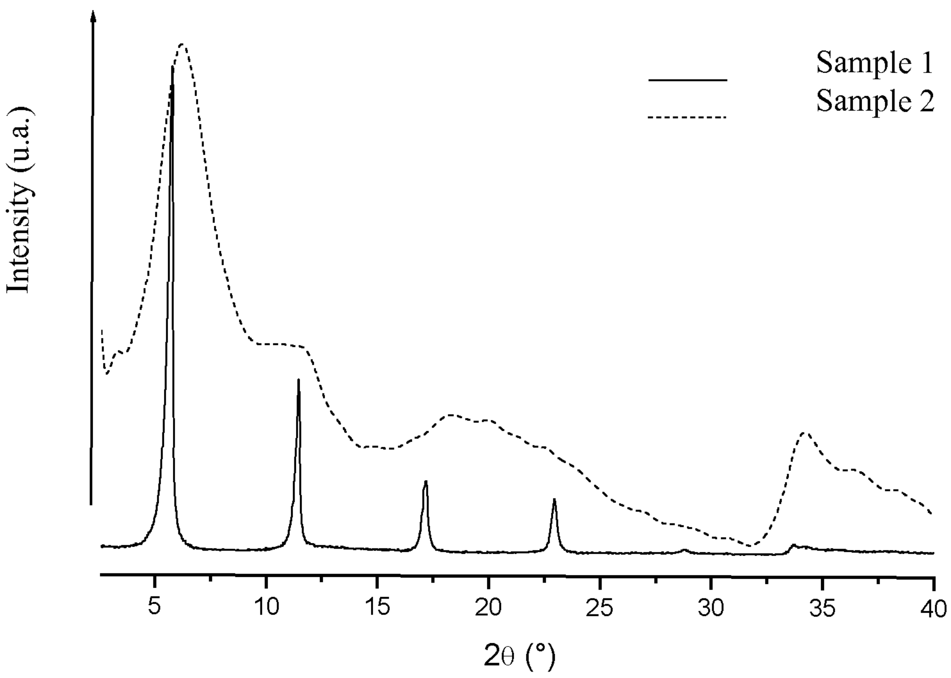
Intensity (u.a.)
Sample 1
Sample 2
5
10
15
20
25
30
35
40
2θ (°)

FIG. 1

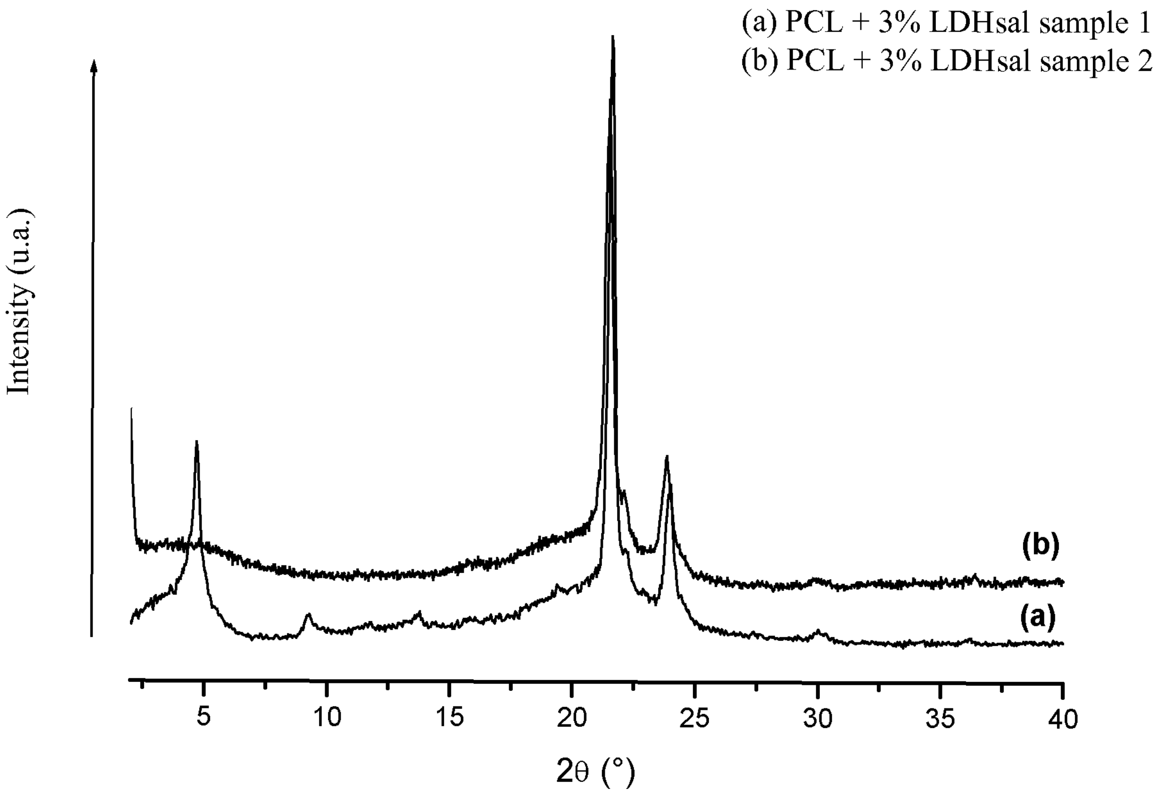
(a) PCL + 3% LDHsal sample 1
(b) PCL + 3% LDHsal sample 2
Intensity (u.a.)
(b)
(a)
5
10
15
20
25
30
35
40
2θ (°)

FIG. 2

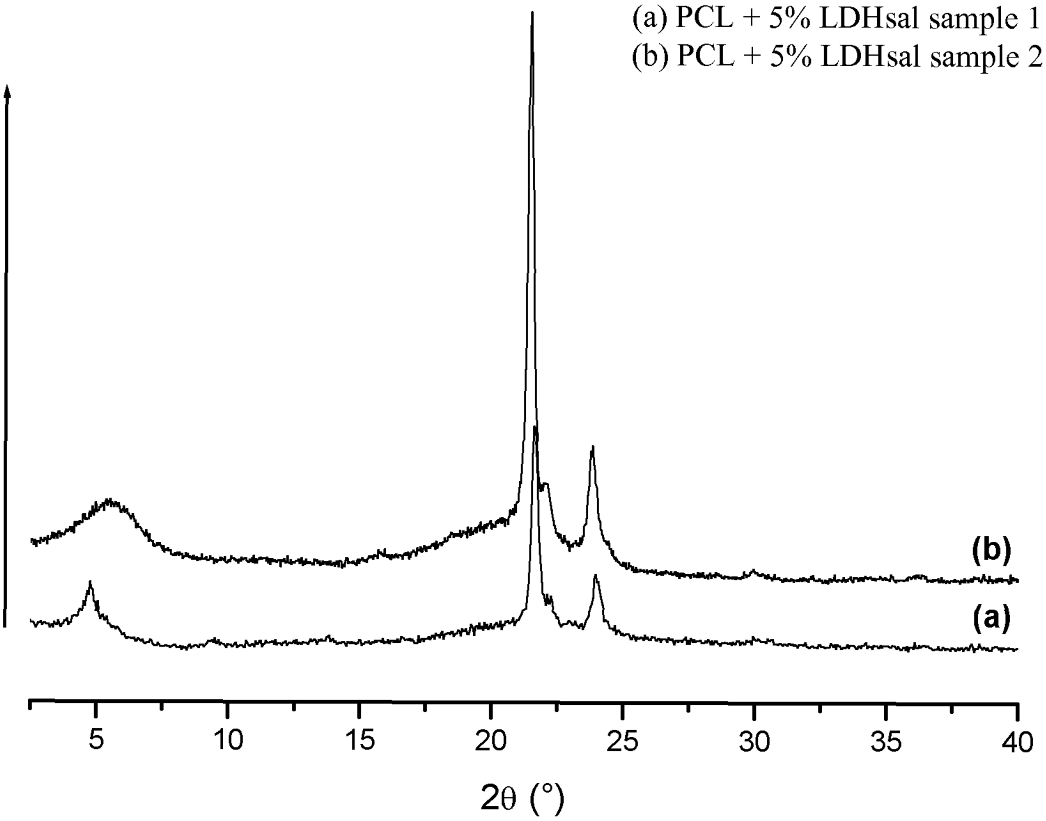
(a) PCL + 5% LDHsal sample 1
(b) PCL + 5% LDHsal sample 2
(b)
(a)
5
10
15
20
25
30
35
40
2θ (°)

FIG. 3

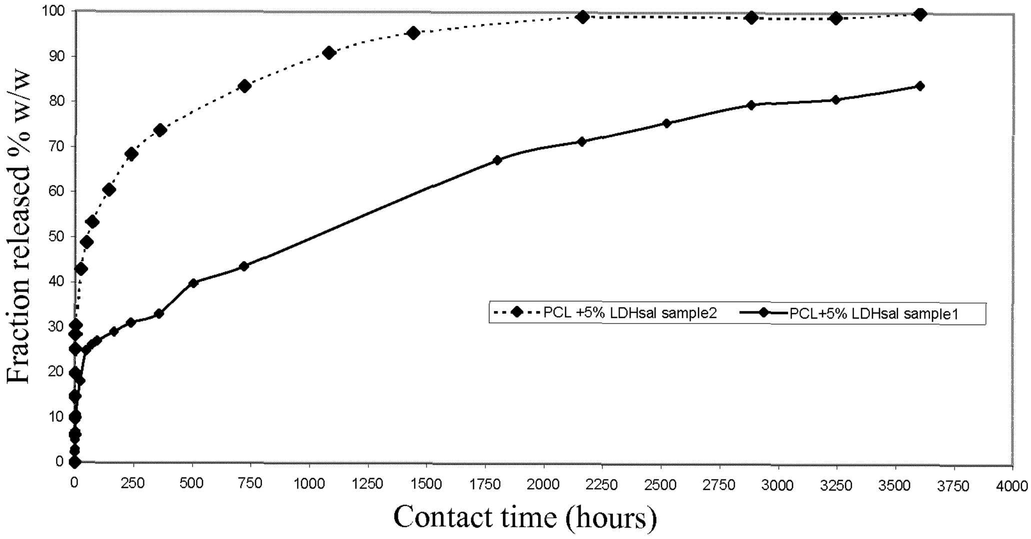
Fraction released % w/w
0
10
20
30
40
50
60
70
80
90
100
0
250
500
750
1000
1250
1500
1750
2000
2250
2500
2750
3000
3250
3500
3750
4000
Contact time (hours)
PCL +5% LDHsal sample2
PCL+5% LDHsal sample1

FIG. 4

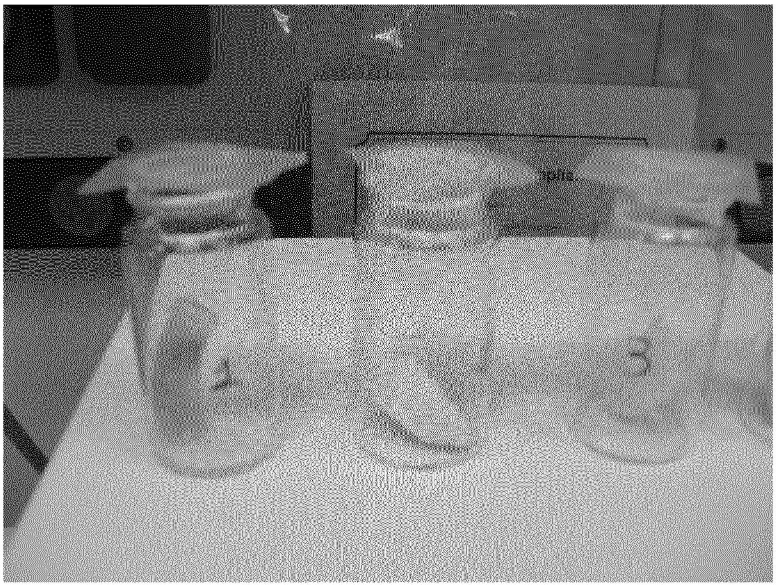

FIG. 5

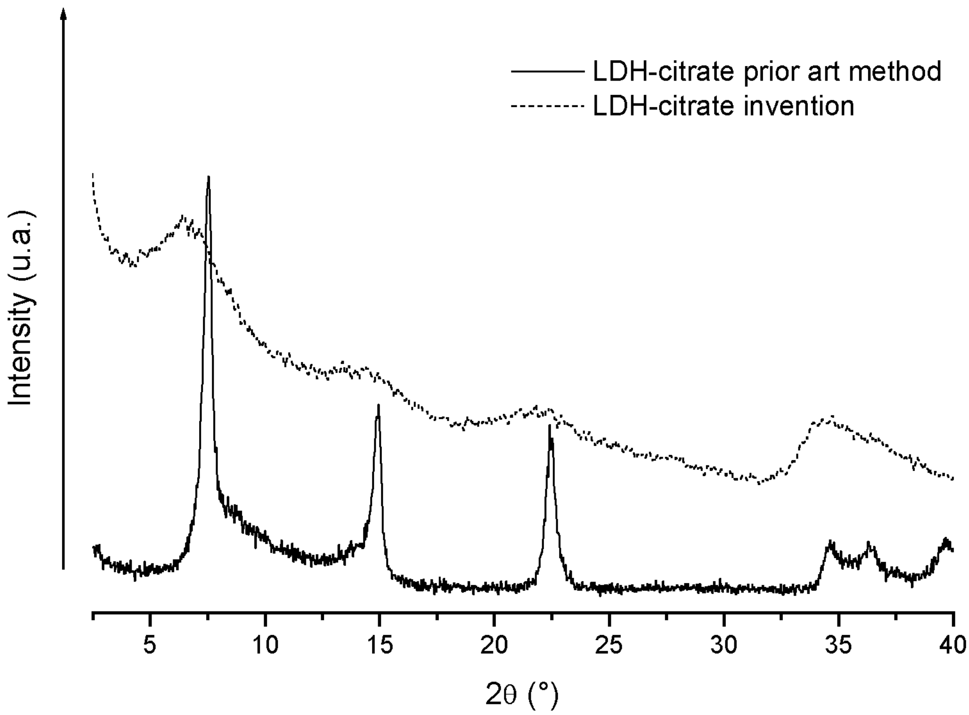
LDH-citrate prior art method
LDH-citrate invention
Intensity (u.a.)
5
10
15
20
25
30
35
40
2θ (°)

FIG. 6

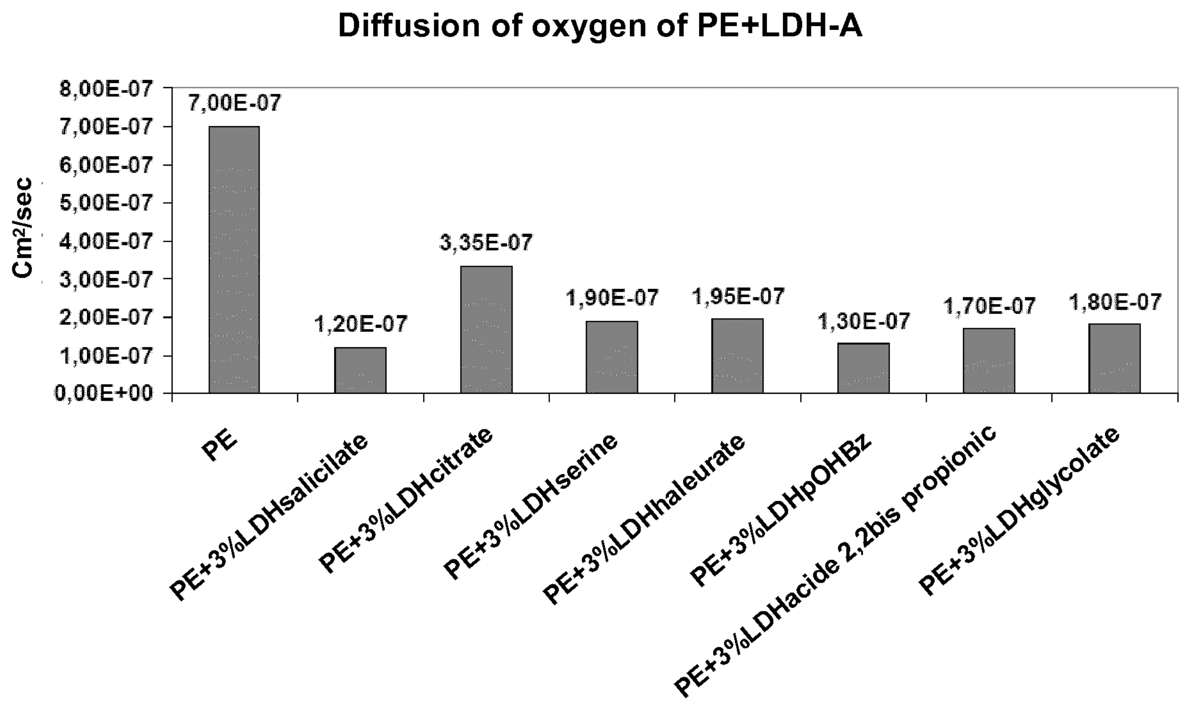
Diffusion of oxygen of PE+LDH-A
Cm²/sec
8,00E-07
7,00E-07
6,00E-07
5,00E-07
4,00E-07
3,00E-07
2,00E-07
1,00E-07
0,00E+00
7,00E-07
1,20E-07
3,35E-07
1,90E-07
1,95E-07
1,30E-07
1,70E-07
1,80E-07
PE
PE+3%LDHsalicilate
PE+3%LDHcitrate
PE+3%LDHserine
PE+3%LDHhaleurate
PE+3%LDHpOHBz
PE+3%LDHacide 2,2bis propionic
PE+3%LDHglycolate

FIG. 7

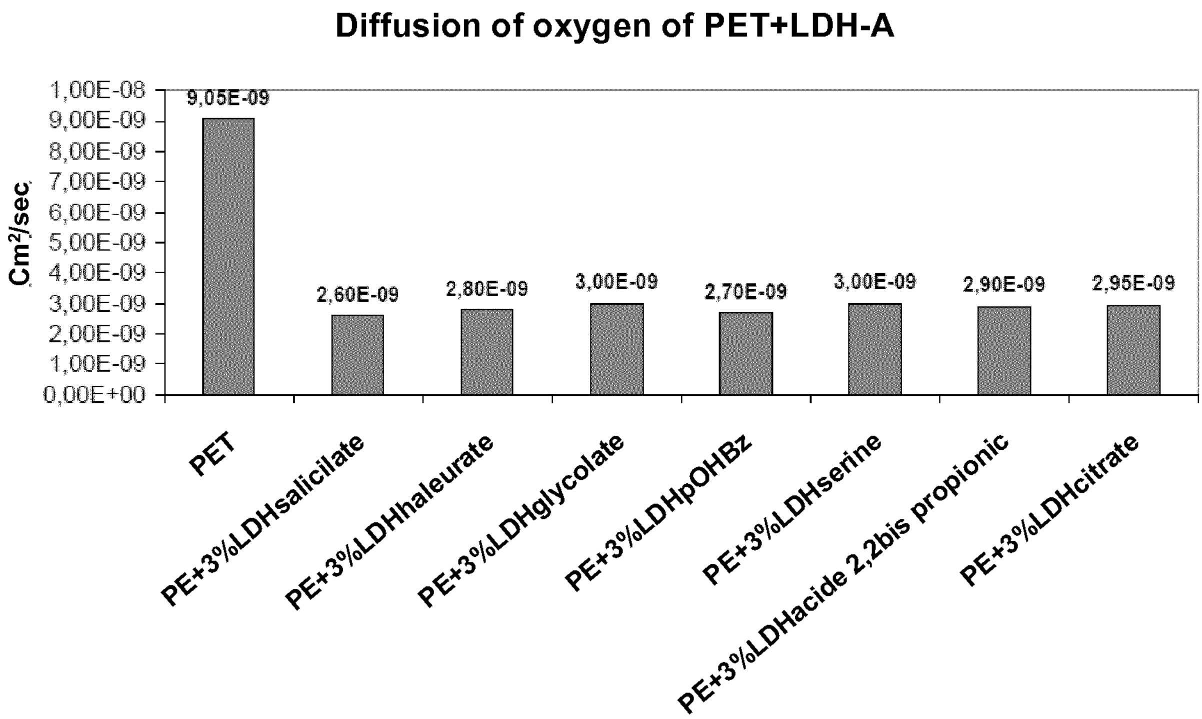
Diffusion of oxygen of PET+LDH-A
Cm²/sec
1,00E-08
9,00E-09
8,00E-09
7,00E-09
6,00E-09
5,00E-09
4,00E-09
3,00E-09
2,00E-09
1,00E-09
0,00E+00
9,05E-09
2,60E-09
2,80E-09
3,00E-09
2,70E-09
3,00E-09
2,90E-09
2,95E-09
PET
PE+3%LDHsalicilate
PE+3%LDHhaleurate
PE+3%LDHglycolate
PE+3%LDHpOHBz
PE+3%LDHserine
PE+3%LDHacide 2,2bis propionic
PE+3%LDHcitrate

FIG. 8

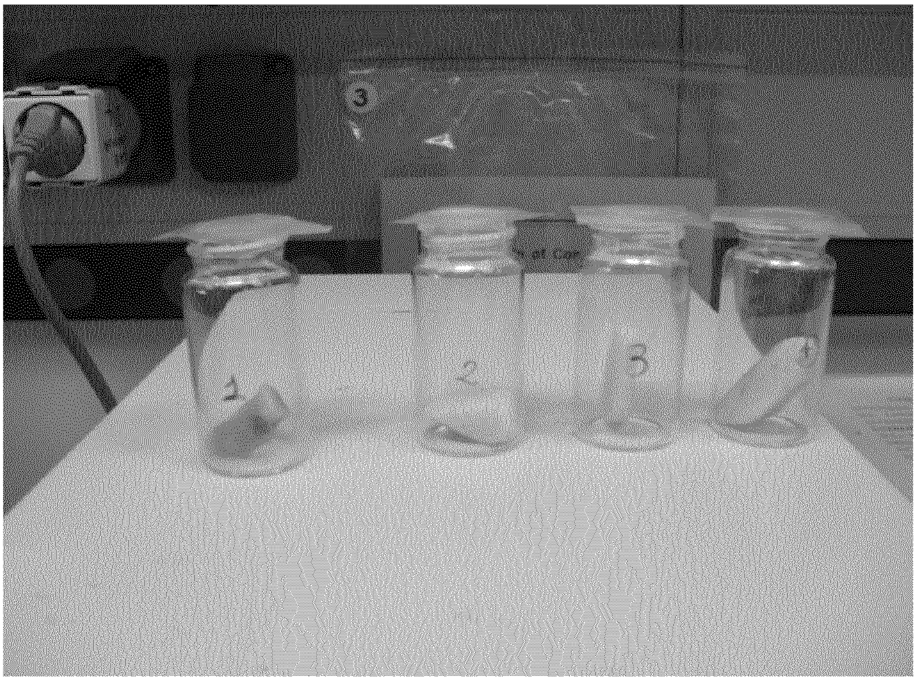


FIG. 9

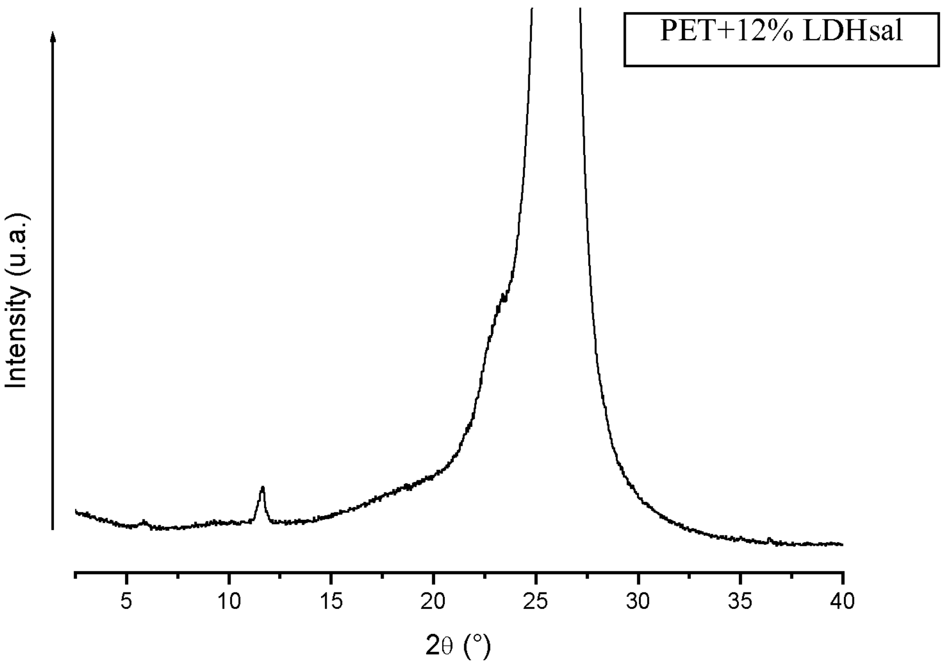


FIG. 10

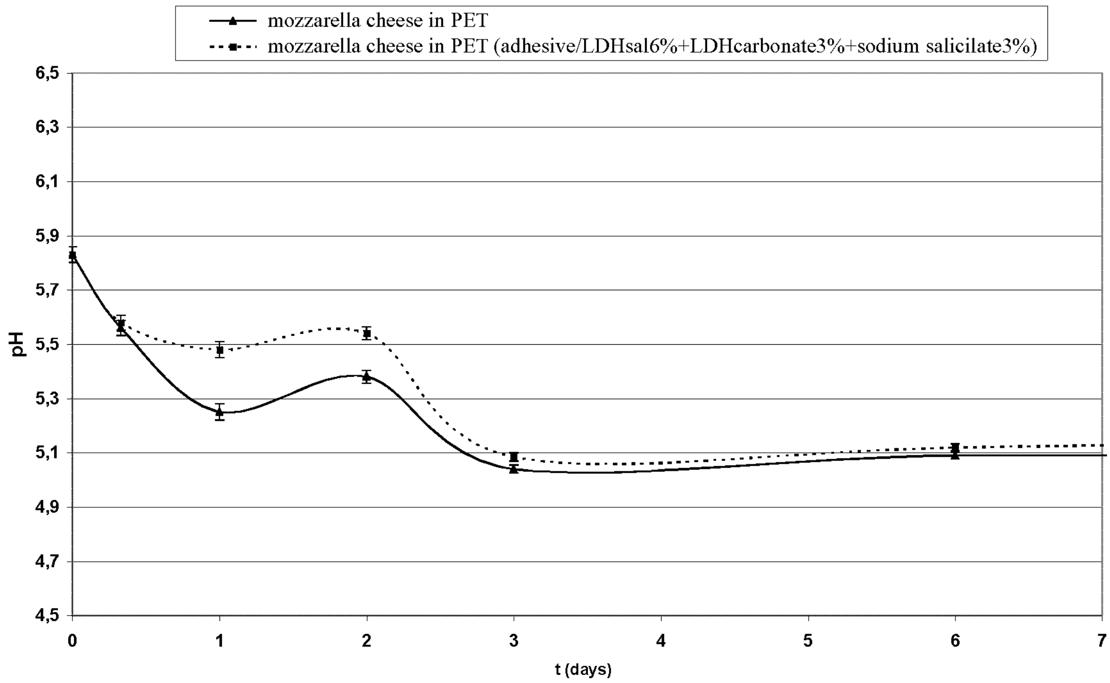


**FIG. 11**

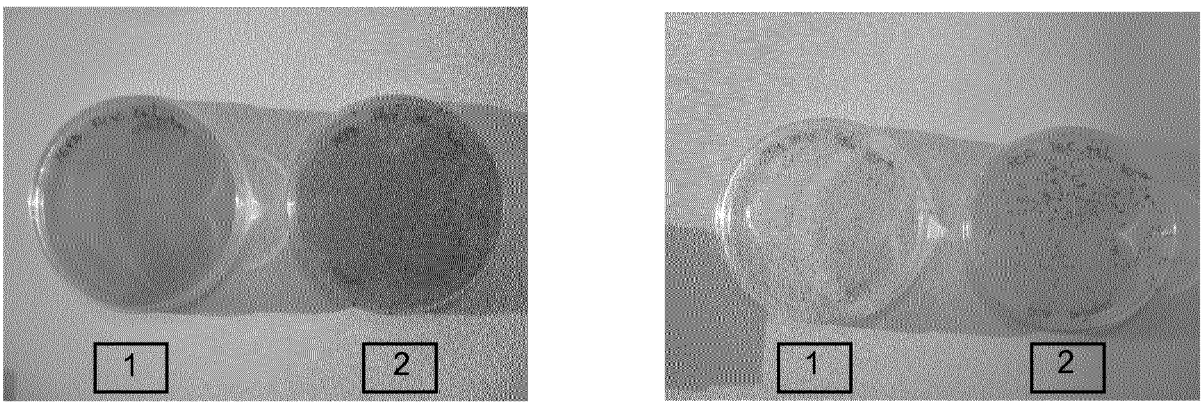


1. PET+adhesive containing active system (6%LDH-sal + 3%LDH-carbonate + 3% sodium salicilate )
2. PET+adhesive

**a) Fungi and yeasts** **b) Total bacterial growth**

**FIG. 12**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2010016034 A
- WO 2009080629 A
- US 20100323103 A1
- US 20080293957 A1
- US 20030114699 A1
- US 20080311410 A1
- US 20110040006 A1
- JP 2006052114 A
- JP 2005023819 A


### Non-patent literature cited in the description


- **CARLINO, S.** The intercalation of carboxylic acids into layered double hydroxides: a critical evaluation and review of the different methods. *Solid State Ionics,* 1997, vol. 98, 73-74
- **FRUNZA et al.** *J. Therm. An.,* vol. 20 (C2), 21
- **MICHAEL ALEXANDRE ; PHILIPPE DUBOIS.** *Materials Science and Engineering,* 2000, vol. 28, 1-63
- **SORRENTINO, ANDREA ; GORRASI, GIULIANA ; TORTORA, MARIAROSARIA ; VITTORIA, VITTORIA ; COSTANTINO, UMBERTO.** *Polymer,* vol. 20 (C2), 21